(19) **Europäisches Patentamt**
**European Patent Office**
**Office européen des brevets**

(11) **EP 1 751 954 B1**

(12) **EUROPEAN PATENT SPECIFICATION**

(45) Date of publication and mention
of the grant of the patent:
**29.01.2014 Bulletin 2014/05**

(21) Application number: **05744380.6**

(22) Date of filing: **12.05.2005**

(51) Int Cl.:
***H04L 29/06*** *(2006.01)*

(86) International application number:
**PCT/GB2005/001854**

(87) International publication number:
**WO 2005/112389 (24.11.2005 Gazette 2005/47)**

(54) **Queuing system, method and computer program product for managing the provision of services over a communications network**

Warteschlangensystem, -Verfahren und -Computerprogrammprodukt zur Verwaltung der Bereitstellung von Diensten über ein Kommunikationsnetz

Système, procédé et produit-programme informatique de mise en fil d'attente pour la gestion de la fourniture de services dans un réseau de communication

(84) Designated Contracting States:
**AT BE BG CH CY CZ DE DK EE ES FI FR GB GR HU IE IS IT LI LT LU MC NL PL PT RO SE SI SK TR**

(30) Priority: **14.05.2004 GB 0410829**
**14.01.2005 GB 0500801**

(43) Date of publication of application:
**14.02.2007 Bulletin 2007/07**

(73) Proprietor: **Orderly Mind Limited**
**London SE17 3QQ (GB)**

(72) Inventor: **KING, Matt**
**London SE11 4XA (GB)**

(74) Representative: **Finnie, Peter John**
**Gill Jennings & Every LLP**
**The Broadgate Tower**
**20 Primrose Street**
**London EC2A 2ES (GB)**

(56) References cited:
**US-A- 6 049 603**     **US-A1- 2003 023 734**
**US-A1- 2003 039 350**   **US-A1- 2003 041 105**
**US-A1- 2003 061 078**   **US-A1- 2003 163 737**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Field of the Invention

The present invention relates to the provision of services over a communications network having limited bandwidth, due to a limitation of the network or limitation on server resources.

## Background to the Invention

Any service provided over a communications network will have limited bandwidth, resulting in a maximum number of customers that can be served per minute. The bandwidth may be limited for technical reasons, such as web service speed or the number of incoming phone lines, or may be limited because there are simply not enough operators to handle the demand for service.

When demand is less than the maximum possible service rate, customers can be served immediately. However, when demand is greater than the maximum possible service rate, problems can occur unless a traffic management system is employed. Excessive demand often occurs in e-commerce when there is a very high interest in a particular product, which may be available in limited quantities when it first goes on sale. A typical example is the selling of concert tickets using an e-commerce system. Fans, knowing that tickets are limited, will all try to use the system as soon as the tickets go on sale, creating a demand "spike" that may well be above the maximum transaction rate that the system can cope with.

The present invention aims to provide a system and method which deals with excessive demands of this type in a way which is acceptable to customers whilst being economically viable.

An e-commerce transaction is a process by which a customer obtains access to a product or service through the processing of payment information, usually consisting of credit card details. A customer participating in an on-line purchase typically follows the following steps:

    1. The customer browses a website, making requests and reading responses using web browsing software. The pages of the website are normally transferred from the web server to the customer's client machine using unencrypted hypertext transfer protocol (HTTP).
    2. When they have made a choice, the customer requests a payment page, usually by pressing a "buy" button, containing form fields in which they can enter their credit/debit card information. This payment page is normally transferred over the network using secure HTTP (HTTPs).
    3. The customer fills in his/her details, and these are sent using HTTPs to a payment gateway. Frequently, the pending transaction is stored in a database.

The payment gateway forwards the transaction details onto a dedicated credit card network, such as VISA [RTM], for processing. Assuming that the transaction is authorised, the transaction is stored in the payment gateway's database. The transaction may also be stored on databases attached to the payment page and the original web server.
    4. The customer is presented with a response indicating that his or her transaction is successful. Usually a confirmation email is also sent to the customer.

At a later time, the goods will be sent to the customer and the amount deducted from their credit card or bank account. This is known as the confirmation of the authorisation attained in step 3, and is usually achieved using a manual process.

In some configurations, the website, payment page and payment gateway all reside on different machines. In other configurations, the website and payment page may reside on the same machine with the payment gateway on a different machine. Alternatively, the payment page and payment gateway may reside on the same machine.

The number of users who can successfully complete this path concurrently is limited by the bandwidth of the system, which in turn is limited by the bandwidth of the most resource intensive step. This is usually step 3, as this contains multiple database writes and always contains at least one connection to an external credit card network.

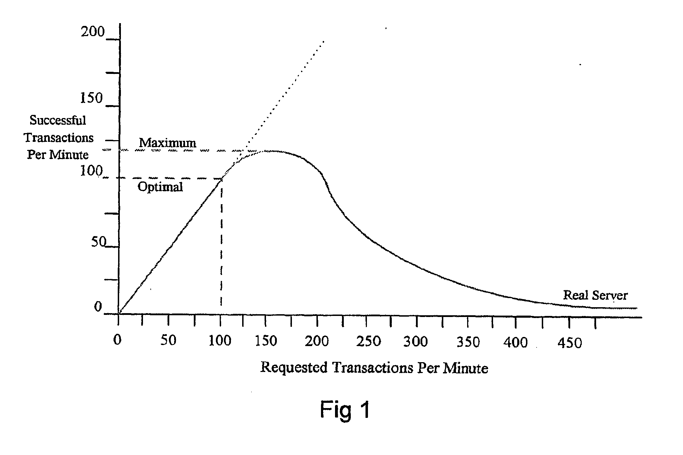

Typically the payment gateway will be able to cope with every requested transaction successfully up to an optimum rate of transactions per minute. As requested rates increase beyond this, some transactions will fail, resulting in frustrated users. However, the number of successful transactions per minute will continue to increase up to a maximum rate. Beyond this maximum request rate the number of successful transactions falls, as the server has to spend ever increasing resources denying new incoming requests. This behaviour is illustrated in Figure 1. The optimal rate is indicated at 100 successful transactions per minute. Beyond this point the number of successful transactions per minute is less than the number of requested transactions per minute. However, the number of successful transactions per minute reaches a maximum at about 120 successful transactions per minute.

Frequently, maximum transaction volumes are expressed in terms of number of simultaneous transactions. This can be calculated with the following formula from the maximum transaction rate as follows, provided the average duration of each transaction is also known:

$$R = S * (60/T)$$

Where R is the maximum number of transactions per minute, T is the duration of each transaction in seconds (typically between 6 and 8 seconds), and S is the maximum number of simultaneous transactions. Note that this value for R is an upper limit, as the calculation assumes that each new transaction occurs immediately after a previous one completes. In practice this is unlikely, and "optimum" transaction rates are typically less than one third of this value.

Payment gateways may have an optimum transaction rate of about 100 successful transactions per minute, although most payment gateways are much less efficient than this. The curve shown in Figure 1 also applies to any web server, though the value of the optimal rate will depend on the number of database writes, the complexity and length of the page served and the transport protocol that is used. The HTTPs protocol, being encrypted, takes much more processing power for the same rate of page requests/response pairs than ordinary HTTP for example.

As the requested transaction rate at the payment gateway increases beyond the optimum level, users of the system will see their requests time out or be otherwise denied. A user intent on buying the product for sale will then cause the request to be re-submitted, by clicking on the submit or buy button in the form again or by hitting reload. This causes an additional request to be sent to the payment gateway, which must also be dealt with, further increasing the server load. For example, referring to Figure 1, if 200 users make requests in one minute, around 90 of those will experience failed transactions. In the next minute, assuming all 90 of these users repeat their request, and another 200 new users enter the system, there will be 290 requests to the server. Only around 50 of these will experience successful transactions, giving 440 requests for the next minute and so on until catastrophic failure results.

Furthermore, as the payment gateway fails, users may start to jam up the earlier stages of the e-commerce path, resulting in saturated payment pages (stage 2) and eventually a saturated web server (stage 1). This problem is particularly significant if all these stages reside on the same physical machine.

As stated above, this situation is particularly serious when there is a very high interest in the particular product which is available in limited quantities and goes on sale at a particular time. A "spike" of customer requests is formed which is well above the maximum transaction rate the system can cope with. Catastrophic failure then propagates backward through the system. Catastrophic failure will last as long as customers continue to submit requests and for popular events can last for many hours.

This creates a number of problems. Firstly, the experience of buying a product or service is protracted and is extremely frustrating, creating negative publicity for the service providers. Customers become angry that their time is being wasted. Secondly, customers perceive that the assignment of successful transactions is random or based on the whims of the networking hardware, leading to intense dissatisfaction. Thirdly, the server load means that attempts to modify the pages to improve the system "on the fly" may not succeed. If the high load has been anticipated, certain checks (such as credit card authorisation) may be postponed until after the 'sale' to increase performance, causing further work and uncertainty as to the number of tickets actually sold. The server load means that attempts must be made to increase capacity at an additional cost to the vendor and ultimately to the customer. Additional staff must also be hired to cope with the influx of orders and these staff members will have less time to deal with dissatisfied customers.

A simple but expensive solution to some of these problems is to increase the bandwidth of the most limited part of this system, usually the payment gateway, by adding additional servers in parallel. This is called scaling up. In practice, if the payment gateway is the bottleneck for the process, it is in general not possible to scale up its capacity to meet arbitrary demand rates. This is for two reasons. Firstly, the bandwidth of the credit card network is usually limited and secondly, the bandwidth of the database system that stores the transactions is limited. Database servers are very expensive to scale and there are often technical reasons why the number of database servers cannot be increased beyond two.

Whilst adding servers may allow a vendor in practice to double the transaction rate, the actual level of demand for a particular product cannot be accurately predicted and the risk of catastrophic failure for very high interest sales is not reduced. All that is achieved is further expense both in hardware and in staffing costs.

Finally, in real e-commerce, servers more frequently fail for reasons other than excess demand. Examples include network or power outages, hardware faults, system updates or reboots, and software errors. In these cases too, customers are prevented from obtaining offered products and services, frequently being presented with an error message instead of the desired successful transaction. Unless a service provider is alerted to a failure and performs the necessary repairs, these customers may be lost.

US 2003/023734 A1 describes a method and apparatus for regulating access to a scarce resource, which is typically accessed through a web server. When a request for access to the scarce resource is received, it is first determined whether the access level for the scarce resource is at a maximum. If it is at the maximum, the requester is placed in a queue and notified of this, pending the requester reaching the head of the queue and the access level dropping below the maximum.

The present invention provides a different solution to the problems described above, and in a way that is satisfactory both to customers and is economically sensible for the vendors.

## Summary of the Invention

According to a first aspect of the present invention as claimed in claim 1, a method for managing requests for service to a service host over a telephone communications network comprises the steps of:

receiving from a customer terminal via the telephone communications network a request for service to be supplied by the service host;
allocating a queue identifier to the request for service;
receiving from the customer terminal a subsequent request for service to be supplied by the service host;
retrieving the queue identifier for the request for service;
performing a comparison between the queue identifier and queue status information; and
passing to the service host the request for service in accordance with the result of the comparison,
wherein the steps of the method are performed at a queue server and the step of allocating the queue identifier to the request for service is performed independently of whether the request for service is currently eligible for service by the service host.

According to a second aspect of the present invention as claimed in claim 9, a method for managing requests for service to a service host over an Internet communications network comprises the steps of:

receiving from a customer terminal via the Internet communications network a request for service to be supplied by the service host;
allocating a queue identifier to the request for service;
providing the customer terminal with access to the queue identifier;
receiving from the customer terminal the queue identifier as part of a subsequent request for service to be supplied by the service host;
performing a comparison between the queue identifier and queue status information; and
passing to the service host the request for service in accordance with the result of the comparison,
wherein the steps of the method are performed at a queue server and the step of allocating the queue identifier to the request for service is performed independently of whether the request for service is currently eligible for service by the service host.

According to a third aspect of the present invention as claimed in claim 38, a system for managin requests for service from a customer terminal to a service host over a telephone communications network comprises a server for receiving from the customer terminal via the telephone communications network a request for service to be supplied by the service host, the server including:

means for receiving a request for service from the customer terminal;
means to allocate a queue identifier to the request for service;
means for generating queue status information;
means for retrieving the queue identifier following a subsequent request for service from the customer terminal;
means to perform a comparison between the queue status information and the queue identifier; and,
means for passing the request for service to the service host in dependence on the result of the comparison,
wherein the server is a queue server and the means for allocating the queue identifier to the request for service is adapted to allocate the queue identifier independently of whether the request for service is currently eligible for service by the service host.

According to a fourth aspect of the present invention as claimed in claim 44, a system for managing requests for service from a customer terminal to a service host over an Internet communications network comprises a server for receiving from the customer terminal via the Internet communications network a request for service to be supplied by the service host, the server including:

means for receiving a request for service from the customer terminal;
means to allocate a queue identifier to the request for service;
means for providing the customer terminal with access to the queue identifier;
means for generating queue status information;
means for receiving the queue identifier as part of a subsequent request for service from the customer terminal;
means to perform a comparison between the queue status information and the queue identifier; and,
means for passing the request for service to the service host in dependence on the result of the comparison,
wherein the server is a queue server and the means for allocating the queue identifier to the request for service is adapted to allocate the queue identifier independently of whether the request for service is currently eligible for service by the service host.

According to a fifth aspect of the present invention as claimed in claim 37, there is provided a computer program product having computer executable code stored thereon for causing a computer to perform the method of the first or second aspects of the present invention.
Preferred embodiments of the different aspects of the invention are set forth in the dependent claims.

## Brief description of the Drawings

Examples of the present invention will now be described in detail with reference to accompanying drawings, in which:

Figure 1 is a graphical illustration of the behaviour of a typical server;
Figure 2 is a schematic representation of a typical e-commerce system in accordance with the prior art;
Figure 3 is a schematic representation of an e-commerce system in accordance with the present invention;
Figure 4 illustrates the relationship between queued customers, queue servers and a queue management system in an example of the present invention;
Figure 5 illustrates the stages of customer flow in the queuing system in accordance with the invention; and
Figure 6 illustrates an example of a screen-grab of a Queue page presented to the user's browser in accordance with the present invention.

## Detailed description

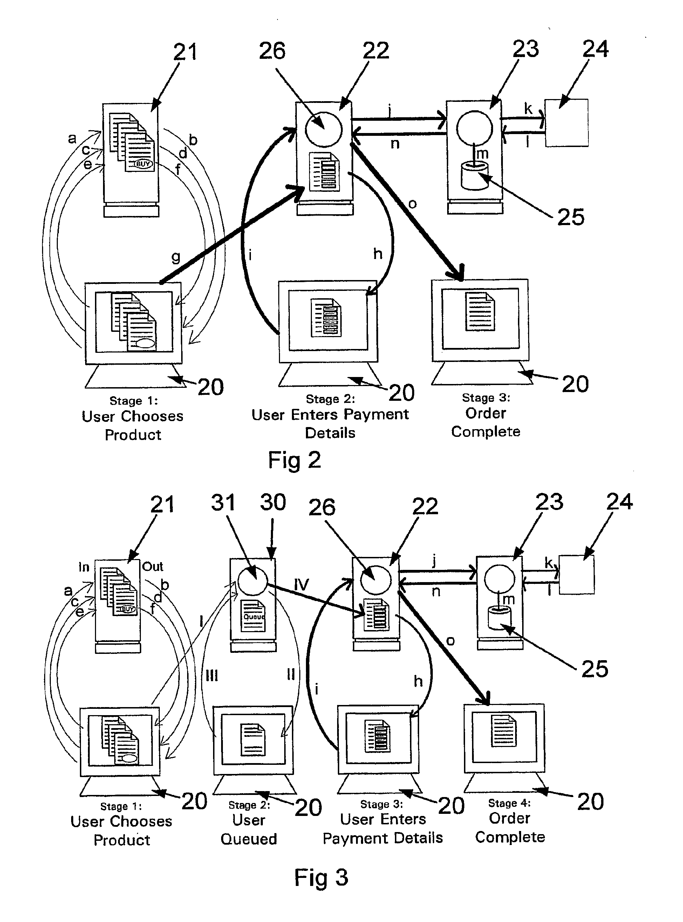

Figure 2 illustrates a typical non-queued e-commerce system. The customer has a customer terminal 20. The customer terminal is shown three times in order to represent the three phases the user goes through during a purchase. The purchase depicted in Figure 2 consists of the following steps, indicated by arrows (a) - (o).

a) The user makes an HTTP (HyperText Transfer Protocol) request of a web server 21.
b) The web server 21 responds with an HTTP response containing an HTML (Hyper Text Markup Language) page. The page is displayed on the user's screen.
c) The user clicks on links to select other pages, or products to buy, resulting in further requests.
d) This results in further responses from the web server 21 containing different pages. If a user clicks on a link that indicates a product has been chosen, that information is stored on the server (not shown).
e) Eventually, the user must click on a link that causes the server to respond...
f) .with a page containing a "Buy" or "Check Out" button.
g) When the user clicks on this button, the user's browser sends a request to a secure web server 22, usually protected by the HTTPs (secure) protocol. HTTPs is used to protect sensitive information such as credit card details. HTTPs has a load penalty attached to both client and server machines due to the encryption, so HTTPs transactions are represented in the diagram with bold lines.

h) The secure web server 22 responds with a page containing blank form elements for the user to enter his payment details, such as a credit card number.
i) Once the user has filled in the form, and presses the "Submit" button, the information is sent back to the secure web site. The pending order may at this point be saved to a database (not shown).
j) The secure web site forwards the information to a payment gateway 23, again over HTTPs, and waits for a response.
k) The payment gateway extracts the credit card number and amount and other details entered, and sends them to a credit card network 24 for processing (this may or may not be over HTTPs).
l) The credit card network responds with a decline, or an authorization for the amount requested. We shall assume the latter takes place.
m) The payment gateway writes the order to a database 25.
n) The payment gateway sends the result to waiting logic 26 on the secure web server. The secure web server may write this to a database.
o) The logic 26 on the secure web server sends an HTTPs response to the user indicating the order is successful. This is also usually followed up with an email (sent separately).

This is just one example of an e-commerce transaction. There are many variations. For example, steps (i) and (j) may bypass the Secure Web Site, so results from the payment form are submitted directly to the payment gateway.
Steps (n) and (o) may bypass the Secure Web Site, so results from the payment gateway are submitted directly to the end user (this is rare, and requires further communication between the payment gateway and other systems to establish that an order has taken place).
After the order has been placed (o), further interaction may occur between the various server systems, including the transfer of database information
The Web Site, Secure Web Site and Payment Gateway may all reside on separate machines. Or they may reside on the same machine. Alternatively, one may reside on one physical machine, and the other two may reside on a different machine. Frequently, the Web Site and Secure Web Site reside on the same machine, but listen on different TCP/IP ports. They may still be considered as logically separate systems in most cases.
The type of system described in Figure 2 has no mechanism for dealing with demand exceeding the system capacity in a satisfactory way. A system in accordance with the present invention incorporates an additional server 30 between a customer terminal and the secure Web server. The additional server 30 is a queue server which acts as another logical system in between the Web Site and the Secure Web Site. An example system in accordance with the present invention is shown in Figure 3.

Figure 3 is the same as Figure 2 except that step (g) of Figure 2 is replaced by queueing steps (I) -(IV). The user terminal 20 is shown four times in order to represent the four stages of the transaction. The system includes a web server 21, secure web server 22, payment gateway 23 and credit card network 24, as described with reference to Figure 2. The new queueing steps are as follows:

I) When the user clicks on the "Buy" or "Check Out" button, instead of making a request of the Secure Web Site as previous, the user's browser makes a request of logic 31 on a Queue Server.

II) If the logic 31 determines that the user should be queued, the server responds with a Queue page, containing a request number. The request number is stored on the user's machine.

III) The Queue page contains code that is executed on the customer machine, which determines when the user's request is likely to be due for service. This page also contains code that automatically refreshes the page with another HTTP request (III) at this time, or every few minutes, whichever is the sooner.

IV) If the logic 31 on the Queue Server determines that the user is at the front of the queue, the user's refresh request is forwarded to the Secure Web Site over HTTPs, in a manner identical to (g) in the traditional setup. Otherwise, the server responds with a further queue page (back to step II).

As illustrated in Figures 2 and 3, the queue server of the present invention integrates into a known e-commerce system at a point immediately after a user has chosen the product, and clicks on the 'buy' button. A Target Page, e.g a credit card details page, is presented by a Target Service Host (in the Figures 2 and 3, this is the payment gateway and secure web server 22). In Figure 2, the user is taken directly to the Target Page; in Figure 3 however, the user is directed to a queue server 30, which in turn is connected to the credit card details page. In a preferred embodiment, the queue server is implemented using Java on a Tomcat J2EE Servlet Server. Queue servers have the following properties:

1. For incoming request rates less than the optimal rate of the payment gateway, the user is forwarded directly to the credit card details page.

2. For incoming request rates greater than the optimal rate of the payment gateway, the user is held in an automatically managed queue.

3. Users leave the queue on a first-come, first-served basis, at the optimal rate for the payment gateway (which may be some pages beyond the Target Page).

4. While they are part of the queue, users are informed of how long their wait is likely to be. When it is their turn, they are forwarded to the Target Page automatically.

5. Users may leave the queue at any time by closing the browser window (and optionally disconnecting from the internet). Their place in the queue is saved for them, and if they have missed their turn when they log back in, they are taken straight to the Target Page automatically. This is of particular benefit to users who connect to the internet through a modem, and may be subject to per-minute internet use charges.

6. Multiple queues may be employed simultaneously for different products, or to provide different access routes to a single product.

The system of the present invention as described, presents a number of benefits to both the providers of the e-commerce system (and the product being sold), and the customers using the system. Firstly, the risk of catastrophic failure is eliminated. Secondly, the owners of the e-commerce system experience a near-constant stream of customers at the optimal rate for them, which they can specify and control during the sale in real time. As they have regained control of how fast orders are received they can spread the sale over several days, substantially saving on hardware and staffing costs. Thirdly, the users of the e-commerce system perceive that they are part of a fair queue, and will be served on a first-come, first-served basis. Even users who arrive too late to buy limited-quantity products (such as tickets) will perceive that they have been treated promptly and fairly by the system. This greatly increases user satisfaction. The users also have an indication of when they are likely to be served. This means that rather than continuously having to repeat their actions in order to obtain the product, they can do something else with their time instead, and check back when it's their turn, resulting in much higher user satisfaction.

With a system in accordance with the present invention, users no longer repeat their actions, and as a result overall load on the system is greatly reduced, preventing back-propagation of catastrophic failure to the product web site (step 1), and further reducing hardware costs.

The users experience a server that is responsive to them, increasing their satisfaction.

The queue management solution can also be used to prevent single individuals from buying large quantities of the product. This is particularly useful for vendors of event tickets, who wish to reduce the number of sales made to ticket touts.

The queuing system of the present invention uses a numbered request system to handle new and returning users as follows:

1) On entering the queue, each new user is assigned a Request Number, which is stored on their computer as a persistent Cookie. The Request Number can also be stored in an email, provided the customer enters their email address prior to joining the queue, or in the user's internet browser's Bookmarks or Favourites list, or simply encoded elsewhere in the web page response.

2) The system also keeps track of the number currently being served (the Service Number), which in a preferred implementation is automatically incremented at a constant rate (the Increment Rate). As discussed below, this rate can be changed while the server is running to allow fine control of user pass through rates.

3) The response from the queuing system contains the user's request number, the service number, and the increment rate. The HTML response contains JavaScript code that runs on the user's computer to transform this information into a visual display, which may contain one or more of the following elements.

- The user's request number,
- The service number,
- The pass through rate,
- The number of people ahead of the user in the queue (given by the request number minus the service number),
- The estimated wait time (given by the number of people ahead in the queue divided by the pass through rate). This may be displayed in a count-down format,
- Advertising (in standard internet Banner format) or other content from third party sources.

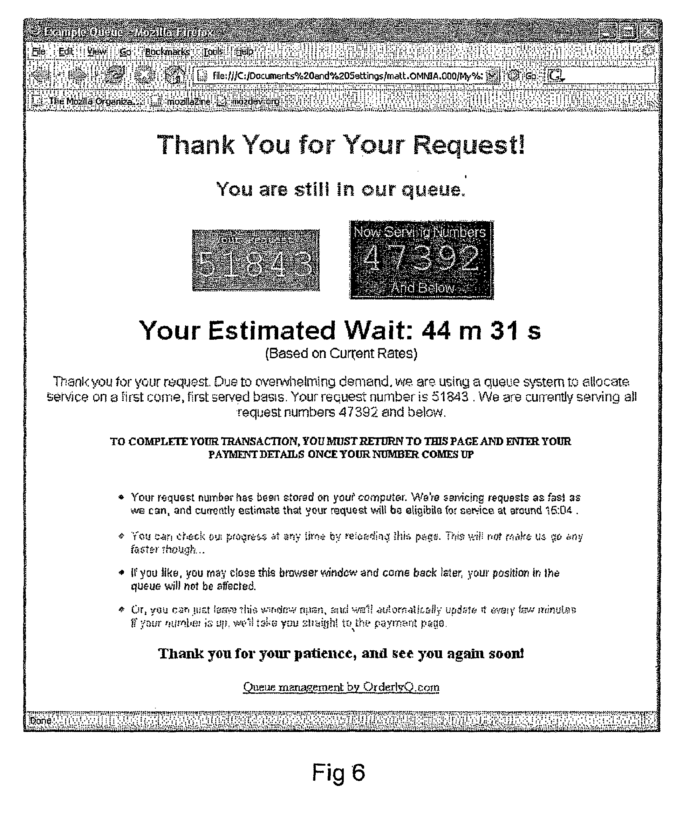

Figure 6 illustrates an example of a "Queue page" visual display presented to the user's browser and showing both the user's request number and the service number.

In addition, the code running on the user's computer automatically refreshes (reloads) the page every five to ten minutes, or when the wait time reaches zero, whichever is the sooner.

When the user makes a further request to the queue server, either by a manual reload or through the automatic refresh mechanism, the previously assigned request number is automatically sent to the server as a cookie along with the request.

If cookies are not being used, the request number can also be sent as part of a link in an email, in the user's Bookmarks (i.e. the user's browser's favourites list), or on a web page (as a Query String, e.g. ?id=5323 within a URL, or HTTP GET parameter), or as a stored Form element inside a web page or HTML email (which may be sent back as an HTTP GET or POST parameter). Further alternative storage mechanisms include storage of the request number as a variable within JavaScript, or some other element of the HTML page, and storage in a dedicated database.

The queue server compares this number to the current service number. If the request number is less than or equal to the service number, the user is passed through to the Target Page. This allows users to return after their number has been 'called', yet still complete the transaction (assuming there are quantities of product left to buy).

If, however, the request number is greater than the service number at the time the request is received, the user is shown a similar page containing the new service number and estimated wait time, and/or number of people ahead in the queue, which may vary if the pass-through rate has changed. No new request number is issued in this case.

Each queue consists conceptually of two components as follows:

1. A single persistent Assigner component, responsible for keeping track of the last request number issued, the automatic increment rate, and the current service number.

2. Multiple, ephemeral, identical Request components, one for each request from a user, responsible for getting new request numbers from the shared Assigner component if necessary, for checking incoming request numbers from returning users against the current service number, and for returning the appropriate response to the user.

This system has a number of technical advantages, which combine to allow it to cope with very large queues. The system is fully automatic, in that no data need be entered manually by the users in order to participate in the queue. No per-user data is stored on the server (individual request numbers are only stored on the client machines), negating the need for per-user database writes, and further increasing availability. No sensitive data is transferred between the user and the queue system, negating the need to use HTTPs as the transport protocol for the system, further increasing availability. Although unnecessary, it should be noted that the queue system of the invention can be further protected by HTTPs where this is required. The work performed by the server is minimized, in that presentation logic is performed by the client machine, allowing for even greater response rates.

Typically, a user accessing the queue system will already have chosen a product, but will not yet have entered in any personally identifiable information.

When the user leaves the queue and is sent to the Target Page, the Target Service Host will typically need information to identify these choices in order to correctly process the user's order.

The invention addresses this need by automatically converting any HTTP GET (query string) or POST parameters sent to the server when the user is initially forwarded to the queue into cookies, and storing them on the user's machine. These parameters can also be stored inside a web page, or email as before. When the user is eligible for service, these parameters are then forwarded on to the Target Service Host. The designers of the protected systems (the Target Service Host systems) are free to choose exactly what information is stored to meet their requirements.

In one example, the choice information itself may be stored on the user's computer by the Queue Server. Alternatively, the choice information may be stored by the Target Service Host, and a customer identifier may be stored by the Queue Server on the user's computer so the Target Service Host may later recover it.

This latter approach is commonly used when session technology is used to store user data, however Target Service Hosts relying solely on the storage of a session identifier must be careful to ensure that the session does not expire before users leave the queue.

While the solution discussed above sends all queued users to a single Target Page, the system is also capable of sending queued users to a range of Target Pages, possibly on different Target Service Hosts. This may be useful in a number of scenarios.

In one scenario, a single queue may be used for multiple product types. A typical instance being the sale of a range of different ticket types (for instance UK-resident and international tickets). While it is certainly possible to encapsulate this choice using the stored GET or POST parameters of the previous section, it is also possible to implement this by sending the users to different target pages.

Another situation where the provision of a plurality of Target Pages is useful is if an event organiser wishes to sell tickets through multiple web-site outlets. Users may feed into a single queue from each of these web sites, and then be forwarded back to the corresponding web site when their turn comes up. This allows the event organizer to ensure first-come, first-served fairness across multiple points of sale, allows simultaneous protection of all the vendor sites, and allows precise control of exactly when tickets become available on each of the sites.

The system in accordance with the invention can also be configured to use a plurality of Target Pages to load balance users leaving the queue automatically across several different servers, if desired, using a variety of load-balancing algorithms.

It is desirable that the system be responsive to administrative requests to manage the queue (for instance, to lower the Increment Rate if the Target Service Host exceeds its optimal rate), and also that the queue be recovered in the event of a server restart due to unforeseen problems. This is achieved as follows.

All the individual Request Numbers are stored on the client machines, so server restart does not disrupt an individual's position in the queue. The current Request Numbers and Service Numbers are written to persistent storage on a regular basis (for example, once every ten seconds), to allow automatic recovery of the queue in the event of a server restart or database malfunction.

The current Request Numbers, Service Numbers and other queue parameters are also checked against input data on the persistent storage (e.g. the internal file system and/or an external database) once every ten seconds, allowing control of these values while the server is running.

The input data (and persistent storage) is administered remotely through a separate, dedicated internet connection, ensuring that the server can be controlled even under very high loads.

There are a number of Increment Rate strategies that are appropriate in different situations. The automatic increment of the Service Number (which dictates which queued customers are eligible for service) has already been mentioned. In the simplest implementation of the inventive system, this Increment Rate is a constant (expressed in users per minute), which can be reset on the fly by system administrators.

Constant Increment Rate is a good strategy when it is anticipated that customers will attempt to use the service very soon after their Request Number has been 'called'. However this may not always be the case; for instance in the case of a queue that is going all night, people may avoid purchasing in the small hours, even if their turn comes up. This may result in a glut of customers in the early morning, seeing as customers usually pass through the system any time after their Request Number has been called.

A more sophisticated strategy is to monitor the number of actual people passing through the queuing system in a particular minute, and reduce (or increase) the increment rate if this is more than (or less than) the optimal rate of the Target Service Host. In extreme cases, this may lead to the Service Number actually decreasing (as opposed to increasing more slowly).

Another strategy is to have the Target Service Host control the Increment Rate directly through the use of messages sent from the target service host to the queue servers (according to some metric calculated by the Target Service Host). This is usually to be avoided due to the additional work performed by the Target Service Host, but can easily be implemented if required.

Depending on the size of the incoming spike, many queue servers may be required to deal with all the requests from people in the queue. A typical queue server in accordance with the invention operates at a rate of 30,000 per minute per server. As the server needs no connections to an external processing network or database in order to function, additional servers may be added to allow for arbitrarily large queueing demands.

In this case, each queue is replicated on each server. Each server maintains its own Assigner component, with its own current request number and service numbers. The servers share the same input data and database for control of queue parameters, so changes made to them affect all servers within ten seconds. The servers synchronize with each other once every ten seconds in order to provide consistent numbers to users.

Users can expect consistent results from each server, so the servers can be assigned at random to incoming requests, regardless of which servers a user may have interacted with before. This negates the need for 'sticky' load balancing between the servers, in which a particular user is always directed to the same server, further reducing hardware costs.

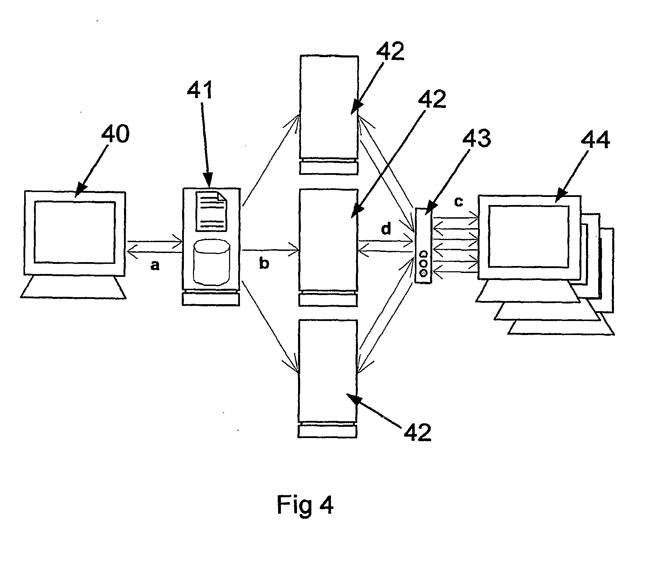

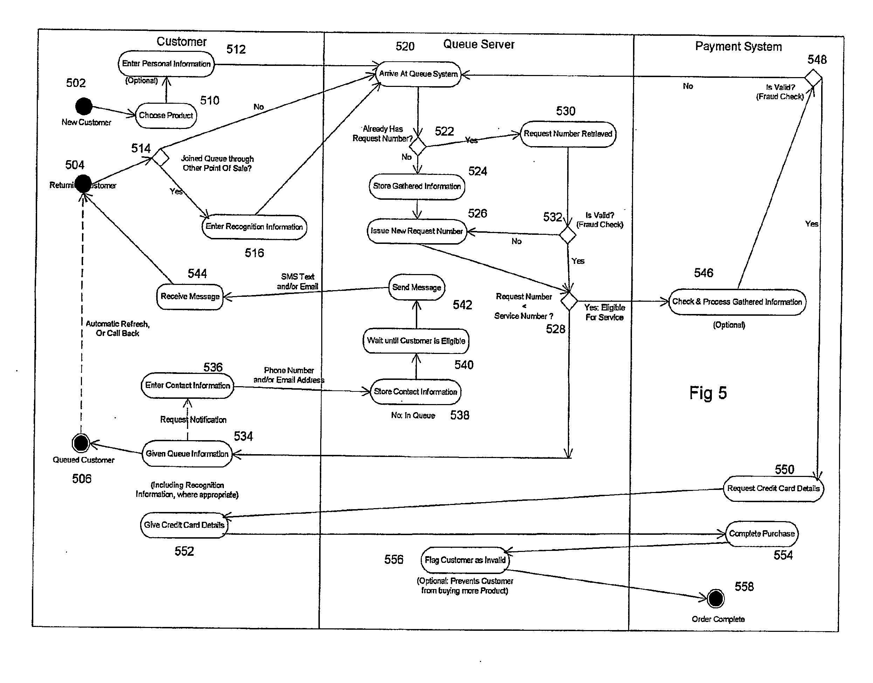

Figure 4 illustrates load balancing when multiple queue servers are used. Also illustrated is a management system. A queue administrator terminal 40 is connected to a management system 41. The management system 41 is connected to each of the parallel queue servers 42. Queues are set up by the queue administrator. The queue administrator 40 interacts with the queue management system 41 at step (a). The queue administrator uploads template files and other data through HTTP requests and responses to and from the management system 41. The management system 41 stores the templates and data in its own persistent storage (consisting of a database and/or file system as appropriate). The data held by the management system 41 is propagated to the memory and file systems of the queue servers 42 at step (b).

In one embodiment, each queue server 42 holds data relating to a number of different queues created in this manner. Once the queue servers 42 have been suitably configured by the management system, customer requests can be queued on the queue servers via a load balancer 43. Communication between the load balancer 43 and the queued customers is indicated as step (c). The load balancer 43 is responsible for distributing requests from the users evenly across the configured servers, in order to make best use of the available bandwidth. No per-user data is stored on the system and so any server may serve the queued user and sticky or session based load balancing is not required. Once the request is received at a queue server it is assigned to the appropriate queue and given a Request Number. The queuing process then proceeds as described with reference to Figure 3.

In cases where more than one server is used, the servers can also be configured to increment the issued Request Numbers in intervals other than one. For instance, if two servers are used, one may issue Request Numbers in the sequence (1, 3, 5, 9...), and the other in the sequence (2,4,6,8...). This ensures that no two customers share the same Request Number.

Optionally, the Assigner components may be configured to obtain new Request Numbers from a single source to ensure first-come, first-served fairness, though this may impose limits on the number of new people queued per minute.

Separate queues (domains) may be established, based on customer or product identifying data. Where appropriate, the domains themselves may be used to balance load between servers. This separation of queuing is referred to as Domain Queuing, and is best explained with an example.

Consider an event that wishes to sell tickets across the nation. The event is likely to be heavily oversubscribed, so the queue system is deployed. Due to the high interest, the queue becomes full (that is, has as many queued customers as tickets available) in a very short time (say 5 minutes).

If only one queue is used, people with better internet access (e.g. lower latency, higher effective bandwidth, better contention ratio) are more likely to gain access to the queue servers during this time due to network saturation. This means a disproportionate amount of tickets will go to people living in major cities, which are closer to the internet backbone for the country.

One way of solving this is to employ multiple queues based on geographic customer data. For instance, if the customers enter the first letters of their postcode (e.g. 'EX' for Exeter) before entering the queue, a separate queue can be deployed for each of these geographic domains.

This ensures that each region is queued separately. Though it may take customers from remote regions longer to reach the queue server, they are still queued in order and with equal priority to those from major cities.

Other 'domains' may be used. For instance, customers may be allocated to separate queues based on demographic (i.e. age, gender etc.) information, or on product information such as price point.

Where possible, domain information should be checked on purchase of product to prevent fraud (for instance, the supplied postcode should be checked against that entered in the Credit Card Form when tickets are purchased in the above example).

Each of these queues is handled by a separate Assigner object within the framework of the queue system. It is also possible to allocate a certain amount of product to each of these queues, and to shut down any particular domain queue automatically when this amount has been sold. This gives product providers fine control over the distribution of product even in very high load situations.

Furthermore, it is possible to control all these queues using a single Service Number for simplicity.

As a specific example, consider a situation where an event wishes to sell 100,000 tickets. 90,000 of these are to be distributed to UK residents (domain 'UK'), with the rest going to international customers (domain 'Int'). In this case, the queue servers use floating point arithmetic to allocate request numbers in the sequence 10, 20, 30, 40,... to the 'Int' queue, and in the sequence 1,2,3...9,11... to the 'UK' queue. This means that when the (single) Service Number reaches 100,000, there are 90,000 UK residents eligible for tickets, and 10,000 international customers eligible, as required.

The queue system is conveniently integrated with the sales system it protects. This arrangement serves both to prevent fraud (which is discussed below), and to enable automatic management of queues based on sales events. A clear illustration of the benefits of an integrated queue system can be seen where all tickets have been sold for a particular domain, people left in the queue should be told of this so that they may leave the queue.

Sales Tracking data can also be used to provide an indication to the Site Administrators of how the sale is progressing, and whether they need to transfer tickets from domain to domain in order to sell out. This can be done on the fly during the sale using the queuing system of the invention.

The inventive queuing system supports three ways of closing queues based on sales data. Firstly, it may simply use manual queue closure. In this method, site administrators for the Target Service Host use a web interface to indicate manually that all tickets have been sold. They may do this on a domain-by-domain basis, or may simply declare that all tickets have been sold for all domains. In either case, queued users are shown a different page indicating that the sale has finished on their next visit to the queue servers, and new users are not allocated new Request Numbers. Depending upon the desired configuration, SMS or email messages may also be sent to users who have entered the required information.

Alternatively, queuing system may use integrated automatic queue closure. In this method, buying ticket (s) at the Target Service Host causes a message to be sent to the queue servers indicating that a certain amount of tickets have been sold. The message may be sent directly from the Target Service Host, or may be sent from the user's browser through an embedded request to a file on the queue servers inside the 'Order Successful' web page that the user is shown after being allocated tickets.

In both of these cases, the message should include the number of tickets bought, any domain information required, and the purchaser's Request Number (to prevent duplicate messages being processed as subsequent orders).

The queue servers must be preconfigured with a maximum number of tickets to sell for each domain. When the indicated number of tickets sold for a particular domain reaches this maximum, the queue for the domain is closed as above.

In a further alternative way of closing queues based on sales data, a simple automatic queue closure may be used. In this method, there are no messages sent from the Target Service Host. Instead, the queue server closes the queue for a particular domain after a prespecified number of people have passed through it.

There are a number of types of fraud that should be prevented in queue-managed e-commerce systems. These are:

    1. Queue Jumping. This is where a user is already part of the queueing system, but attempts to reduce the value of his/her request number in order to be served faster, possibly with the co-operation of another user ahead of him/her in the queue.

    2. Queue Bypass. This is where a user attempts to reach the payment page without having been through the queue management system at all.

    3. Multiple purchase. This is where a user, having been through the queue system, makes multiple purchases of the product. This may only be undesirable in some circumstances, such as a ticket sale as discussed above.

    4. Domain Fraud. This is where a user attempts to buy product outside their stated domain.

While no computer system is ever completely free from the potential for misuse, the present invention may include steps to prevent these frauds.

The queue jumping problem is addressed as follows. Firstly, the use of cookies to store the request numbers represents a substantial barrier to the casual internet user, who would need considerable technical savvy to modify their contents. In order to prevent fraud by people who have such savvy, an additional system is used, based on hashing functions.

A hashing function is a function that takes a lexical string as input, such as "Hello World!", and produces another lexical string as output, such as "AH74KFEu". Hashing functions used for security processes produce output that is sensitively dependent on the input. For instance, the hash of the slightly different string "Hellq World!" should be something completely different, such as "Klo9SydP". Furthermore, there should be no way to recover the original string from its hashed counterpart.

The queue system of the present invention can use the industry-standard MD5 hashing algorithm to implement fraud protection as follows. When a user is initially assigned a request number, for instance 1537, this is combined at the server with a sale-wide secret phrase to produce a lexical string, for instance "MyEventTickets1537". This string is prepended with an additional string that (ideally) uniquely identifies that user's computer. A preferred implementation uses the first two bytes of the user's IP address, to give a final string of, for example, "209.157MyEventTickets1537". This string is then hashed by the server, and the hash is stored along with the original request number on the users's machine as a cookie. The secret phrase is never transmitted to the user's computer directly.

The stored hash string is now used to validate request numbers when the user returns to the queue server as follows. When a user returns to the queue server, the original request number and the stored hash string are both returned to the server as part of the page request. The server then reconstructs the proper hash string for the returned request number from the secret phrase and IP address, and compares it to the hash string returned by the users computer.

If the two strings are identical, the user's request is considered valid, and handled appropriately.

If the two strings differ in any way, the user's request is considered invalid. The user is issued a new, higher request number and hash string, and is in effect sent to the back of the queue as punishment for cheating.

It is important to try to uniquely identify the user's computer in the input to the hash function, as otherwise request-hash cookie pairs could be shared to allow many individuals to use the same request number, effectively allowing them to jump the queue. The implementation described above uses the first two bytes of the IP address because many people do not have static (constant) IP addresses, particularly if they log off the internet and come back later. However, people with dynamic (changing) IP addresses usually have the same first two bytes due to the technical implementation adopted by their Internet Service Provider.

Further uniquely identifying data can also be found in the browser identification string that is a part of every HTTP request.

Additional fraud protection may be obtained by taking personal information, such as the last four numbers of the credit card or a postcode associated with the card, that will be used to make the purchase before joining the queue, and adding this to the hashed string.

Having identified a way of validating users in the queue, it is possible to also use this scheme to prevent users bypassing the queue as follows. The target page of the queue (usually the credit card details page) checks that incoming users have been referred from the queuing page using the HTTP request referrer field. All other users are immediately sent to the queue for processing.

The target page also performs the same validation check that the queuing system performs using hashes of the request number. Users failing the check are sent back to the queue for processing.

If desired, the target page may perform a validation check using a different secret phrase, to distinguish between users who have been through the queue, and users who may still be in the queue.

In order to prevent individuals from making repeated purchase transactions, possibly with multiple credit cards, the payment gateway response page that indicates a successful transaction to the user should delete the stored cookies representing the original request and security hash.

Any further attempt to buy the product would then automatically result in the user being sent to the back of the queue. In heavily oversubscribed sales, this will effectively prevent them from making multiple purchases.

Where Domain Queuing is used, a customer may attempt to purchase product outside their stated domain. For instance, a person in London, on realizing that the London queue is full, may instead report that they are from some other domain. The queue system stores all domain choices (in this case the entered postcode), and forwards them to the Target Service Host. The Target Service Host should ensure that these match any subsequent order information supplied by the customer. In this example, the supplied postcode should match the postcode entered in the credit card form, or delivery address.

Optionally, Domain data may also be included in the string used for the security hash, or stored in the queue database for later checking when other points of sale are used.

It has already been remarked that the storage of queue identifiers allows customers to turn off their computers while they are in the queue without losing their place. There is therefore no guarantee that a particular customer will be online when their turn comes round, particularly if the queue is likely to be in place for an extended period of time.

It is therefore desirable that customers can be notified when the Service Number exceeds their Request Number. To do this, the Queue servers can be configured to store customer communications data, such as an email address and/or phone number, and to send an email or SMS text message when appropriate. The Queue system does this by storing the email address and/or phone number in a database, along with the request number, and periodically checking this database table against the current Service Number and issuing the required messages automatically.

While the system can be configured to obtain this information from all users before entering the queue, this is not recommended for performance reasons. Rather, it is better to first allocate each user their request number, and then provide them with the (optional) means to register their email address or phone number for notification at their request.

In many cases, an initial sale of product will sell out, and then additional product may become available later. An example would be an airline flight. Currently, airlines sell more tickets than there are seats on any particular flight, as they expect a certain number of cancellations, and must ensure each flight is filled to capacity. This leads to customers being 'bumped' to other flights when the expected number of cancellations is not reached, leading to additional costs and customer dissatisfaction.

With the queueing system of the invention, the airline can suspend the queue when all the seats on the flight have been sold. After that, each new potential customer joins the queue in order, and supplies contact information for Customer Notification. As cancellations are made, the cancelled tickets may be offered to the queued customers in order, by increasing the Service Number at a slow, constant rate, until the cancelled tickets are sold.

In the light of the foregoing, it should be clear that present invention is applicable not only to e-commerce but to any scenario in which demand over a communications network might exceed capacity. It should also be made clear that when using the Internet, the requests for service in the method and system of the present invention can use either HTTP GET parameters or HTTP POST parameters, whichever are the most appropriate in the circumstances.

The method of the present invention may be encoded as software which runs on existing hardware devices. Alternatively, specific hardware or firmware may be built to implement the invention. The present invention may be provided as use of a queue server remotely over a communications network as a service to service providers. Alternatively, a suitably programmed queue server may be integrated into a service provider's existing architecture.

As will be readily apparent, most ticket sales do not take place solely online. Usually, customers are also able to call a phone line. Sometimes other points of sale, such as physical box offices or SMS text devices are also used. The invention facilitates the integration of telephone, internet, and other queue systems, thereby allowing customers who join the queue at one point of sale to purchase product at another.

In an equally important embodiment, the present invention may also be applied to telephone product sales systems. The telephone embodiment has similarities to the internet (e-commerce) embodiment described above. There is, however, one major difference: telephones are not, in general, able to store data, so Request Numbers must be stored at the server.

Situations providing sales or other services provided by phone are frequently oversubscribed. This may result in a queue of customers 'on hold' due to a shortage of operators, or new customers receiving the engaged tone if the service provider has run out of phone lines to connect them. Both cases result in customer dissatisfaction, and may result in additional telecommunications expenses to both the service provider and the customer.

Rather than presenting a HTML front end, a Telephone queue system in accordance with the invention is provided with an automatically generated audio message. The audio message(at least) indicates that the customer is in a queue, and updates their expected wait time on a regular basis.

There are two slightly different implementations of the telephone queue system embodiment, depending on whether multiple places in the queue are to be supported for a single telephone number.

In the simplest telephone system, each telephone number is associated with just one Request Number (one place in the queue). Customers calling the telephone line are routed through a Telephone queue server (using, for example, the Asterisk open source PBX). The queue server first checks the incoming telephone number using a Caller ID function. If Caller ID information is unavailable, the queue server can be configured to either ask the caller to hang up, enable Caller ID, and try again, or prompt the user to enter their telephone number using the numeric keypad. Optionally, the Telephone queue server may ask the customer to provide the last four numbers of their credit card, or other personal information, to provide additional fraud protection.

The queue server then checks the telephone number against a database of telephone numbers that are already in the queue.

If the number is not in the database, the caller is 'new', and the Telephone queue server issues a new Request Number, and stores it along with the telephone number in the database. Optionally, Domain Queuing may also be used, using voice recognition or data from the numeric keypad to specify domain information before the Request Number is issued.

If, on the other hand, the telephone number is already in the database, the caller is 'recognized', and the corresponding Request Number is retrieved from the database.

If the Request Number is greater than the current Service Number and if the customer is new, the new Request Number is read to the caller, and the system may also send it to the customer using an SMS text. The caller is then told the current Service Number, and given an estimate of how long the wait will be to become eligible for service.

If, alternatively, the Request Number is greater than the current Service Number but the customer is recognized, the caller is told that their phone number has been recognized, and may be reread their Request Number. The customer is then told the current Service Number, and given an estimate of how long the wait will be to become eligible for service.

Callers are given the option to hang up, and call back after a personalized, prearranged time, when they can expect to be connected immediately. An example message is: "Hello. Due to high demand, you have been placed in a queue. Your wait time is 10 minutes, 24 seconds. Your phone number has been stored by our system and will be recognized, so please feel free to hang up and call back then, when you will be served immediately." This saves the callers the expense of being on hold.

Optionally, the system may hang up at this point. If the service is running out of phone lines to handle new customers, the customer is given the following message: "Hello. Due to high demand, you have been placed in a queue. Your wait time is 10 minutes, 24 seconds. Your phone number has been stored and will be recognized, so please call back then and you will be served immediately. This call will now disconnect." This saves the callers the expense of being on hold, and saves the provider the expense of running multiple phone lines to keep them on hold.

The system may also automatically call back customers on the stored telephone numbers when it is their turn. Instead of forcing users to call the service back, the service automatically calls them back when an operator becomes available. This saves the caller the expense of a second phone call (which instead is borne by the provider).

If, on the other hand, the Request Number is less than the current Service Number, the customer is eligible for service. The customer's call is either serviced by the Telephone queue server, or is forwarded to a Target Service Host (another PBX in this telephony system), or to an operator for service.

Rather than tell the customer their Request Number or the current Service Number, the system may instead simply give an estimated wait time.

Optionally, the Target Service Host (the PBX through which the product/service is available) may cause the Telephone queue system to bar telephone numbers, or remove them from the database, after product has been sold to prevent fraud (e.g. by ticket touts).

In a telephone queue system, multiple places in the queue may be allocated to a single telephone number. For instance, one might have a case where an entire office of people uses a single phone number to make outgoing calls. The queue system first obtains a telephone number as above, and compares it to the list of telephone numbers stored in the database.

If the telephone number is not in the database, the telephone is considered 'new', otherwise the telephone is considered 'recognized'.

If the telephone number is 'new', a new Request Number is issued as in the one to one mapping case above, and a numeric Confirmation Code is also generated using a hashing function of the telephone number, the Request Number, and a secret phrase as before in the Internet solution. The Confirmation Code is stored along with the Request Number and telephone number in the database. The Confirmation Code is read to the caller, and may also be sent in an SMS text as before. The caller is considered 'new'.

If the telephone number is 'recognized', the caller is asked whether they are already in the queue, and answers by pressing the numeric keypad on their phone or through voice recognition technology.

If the caller indicates that they are already in the queue, the caller is asked to enter a Confirmation Code. If this matches a stored entry in the database with a matching telephone number, the caller is treated as 'recognized'. If not, the caller is prompted to re-enter their Confirmation Code, or (optionally) assigned a new Request Number and Confirmation Code as follows.

If the telephone number is 'recognized', but the caller indicates that they are not already in the queue, a new Request Number and Confirmation Code are generated, sent and stored as above. The caller is considered 'new'.

New and recognized callers are then treated as described in the one to one mapping case above.

After product has been sold to the caller, the caller may be barred or deleted from the database by removing or altering the record corresponding to their telephone number and Confirmation Code.

In this way, multiple customers may use the same telephone number, but be treated as individuals by the system.

In a variation on the Telephone queue system embodiments, the Telephone queue system can be easily modified to provide a queuing service over SMS (so-called 'text messaging').

As in the Telephone queue system, where there is a one to one mapping embodiment, the customer enters the queue for the first time by sending a text message to a SMS queue server. The text message may also contain Domain information used to route the customer to the appropriate queue. The server responds with a text message back to the customer's telephone (optionally) indicating the customer's Request Number, (optionally) the current Service Number, and an estimate of how long they will be waiting. The Request Number and (mobile) telephone number are stored in a database as in the Telephone queue service embodiments.

Subsequent text messages sent to the SMS queue server result in a response indicating an updated wait time.

When the Service Number exceeds the issued Request Number, the server may respond by purchasing product automatically (and billing the user through the user's telephone service provider), or by notifying the customer to take some other action, or by allowing the customer to take some other action.

An SMS queue service embodiment of the invention with many to one mapping is also provided. This embodiment is identical to the one to one mapping case above, except that the message returned on entering the queue contains a Confirmation Code. This code must be returned in subsequent messages by the customer in order for the system to distinguish between different customers using the same phone.

Another embodiment integrates the Internet and SMS systems described above, using email facilities. Most modern email clients are capable of displaying HTML email pages, though some are not. Some email clients are also capable of storing cookies.

Customers enter the queue by entering their email address on a web page, or by sending an email to a particular email address. The email or web page may gather other data for Domain queuing. An (email) queue server responds by generating a Request Number, and sending an email back to the received address.

The response email may contain a link containing the user's request number and a security hash (though there may be no way to ensure that this security hash is constructed from terminal-specific data, the customer's email address may be used for this purpose).

This link can then be clicked on, or pasted into a web browser to subsequently join an internet queue. The server responds to the request encapsulated by the link by storing the appropriate queue information on the customer's terminal, or at the queue server as appropriate. The customer is then part of an Internet queue.

The email may also contain an element (such as a graphic) downloaded from the queue server; this download may also cause the user's browser to store necessary information to participate in the internet queue, without the customer having to paste or click on the link through the use of persistent cookies or the user's bookmarks.

The use of email to send credit card data is discouraged, as email is not a secure method of information transfer, so users entering the queue by email are likely to complete their purchase using another point of sale.

Optionally, the email may also contain a Confirmation Code that the customer may enter into the telephone based system.

For convenience, embodiments of the system can be used in physical retailers (box offices, stores etc.). In this system it is envisaged that the retail staff have access to the internet or telephone, and enter customer's details into the appropriate version of the inventive queuing system on their behalf.

In addition to the Request Number, a Confirmation Code may be issued by the web server, and given to the customer, who must use the code in addition to the issued Request Number to access their place in the queue.

If possible, the last four digits of the customer's credit card, or other personal information should be used to generate the Confirmation Code, so that it can be checked later.

The Request Number and Confirmation Code may be used to access their place in the queue through other points of sale if the customer chooses not to return to the retailer in order to buy product (this scenario is discussed further below).

On the other hand, if customers do wish to complete the purchase through the retailer, they would return with the Confirmation Code and Request Number, and any personal information supplied. The retailer can then complete the sale for them through the queuing system, or may complete the sale using existing point of sale equipment. In the latter case, the queuing system should be notified of the sale in order to facilitate automatic queue closure (thus, for example, all Request Numbers, Telephone Numbers and Confirmation Codes will be sent to an Internet Queue Server).

In sales where the rate of sale becomes less than the Increment Rate for a certain period of time, such that new customers should pass through the queue immediately and transparently, the queuing system can notify the retailers of this, so that instead of helping new customers enter the queue, they simply sell the product.

Note that if cash is used to buy tickets, then other personal information is needed for fraud prevention, if desired.

The scenarios described above are not the only instances where a customer may enter the queue using one point of sale, and purchase tickets, services etc. using another point of sale. Specific examples include queuing on internet, and buying on telephone; queuing on telephone, buying on internet; and queuing on email, buying through other means.

Note that if an integrated solution is adopted, the use of Confirmation Codes is encouraged to prevent people from fraudulently entering someone else's telephone number into the system.

In all integrated cases, once the customer has bought product through one point of sale, the servers handling the queue for other points of sale may be notified to prevent further purchasing (for instance to prevent multiple sale by ticket touts).

In the scenario where customers queue on internet, and buy over the telephone, a customer enters the queue online using the system already discussed. On the queue page, the customer is given the option to buy tickets by telephone. The customer enters their telephone number, and this is stored along with their request number, and transmitted to the telephone queue server.

If many to one mapping is used on the telephone queue server, then a Confirmation Code must also be generated and given to the customer, and sent to the telephone queue server.

When the customer then calls the telephone hotline, the necessary data is already present in the telephone queue server's database, and the customer is treated as 'recognized'.

If an SMS point of sale is also used, the internet queue server need only send the information to the SMS queue server for the customer to be similarly handled.

In the scenario where the customer queues on the telephone and buys on the internet, he enters the queue using the telephone queue system as discussed, and is given a Request Number and (optionally) a Confirmation Code. The telephone number, Request Number and (where present) Confirmation Code are sent to the Internet Queue Server, where they are stored in a database. The customer then logs onto the internet and reaches the Internet Queue Server.

As the Internet Queue Server has no means of recognising this customer automatically, the customer is issued a second Request Number, and is shown the Queue Page. Because they entered the telephone queue first, this Request Number will usually be larger than the original Request Number obtained by phone.

On the Queue Page is an option for people who have already joined the queue by phone to use their telephone-issued Request Number. Customers selecting this enter the Request Number they received by phone, their telephone number, and (where present) their Confirmation Code. If a matching record is found, any Request Number or other queue information stored on the customer's terminal is deleted, and overwritten with the information found from the database. The customer can then proceed through an internet queue as before.

Alternatively, customers reaching the internet after calling the telephone system may be given the option to enter their telephone number before being issued an internet request number.

As the SMS queue server also provides the customer with identical information to the Telephone queue server, the same mechanism can also allow customers who have joined the queue by Telephone to buy their tickets by SMS (and vice versa), or for customers who have joined the queue by SMS to purchase product online (and vice versa).

Another example where the queue is entered in one medium and the point of sale is another is where queuing is on email and buying is through other means. Email is, as stated above, not a secure means of transmitting credit card information. Therefore, some other means must be used. Customers entering the queue by email can be directed to arrive at the internet queue; from there they may proceed to any of the other points of sale.

Figure 5 shows one possible configuration of customer flow in the queuing system of the invention. The Figure conforms to the well-known UML (Unified Modelling Language) Activity Diagram specification. In this representation technique, Initial States (New Customer, Returning Customer) are marked as solid black dots. Final States are marked as solid black dots with a circle round them (Queued Customer, Order Complete). Actions and States are represented as rounded rectangles. Decisions are represented as diamonds, and flows (on completion of Actions or results of Decisions) are represented by arrows. Finally, dashed arrows represent optional user actions.

The system is divided into three "Swim Lines": Customer; Queue Server; and Payment System, which represent different actors (i.e. components) of the overall system. The Figure applies equally to both the Internet and Telephone embodiments of the queuing system described above, as will be appreciated from the following description.

For the Internet system, Customer represents: the Customer; the Customer's browser; and the web site through which the Customer makes product choices. Payment System represents a Payment Gateway responsible for taking and processing credit card information. Queue Server represents the Internet Queue Server.

For the Telephone system, Customer represents the Customer and the Customer's telephone. Payment System corresponds to a call centre, its operators and associated software. Queue Server represents the Telephone Queue Server.

New Customers 502 enter the system and choose a product 510, either through a web site, or by calling a phoneline, or in some cases by sending a text or email. Optionally, they may be required to enter additional personal information 512, which may be used as later security information (for instance, the last four numbers of the credit card they will use to complete the purchase), or for some other purpose.

Once this information is gathered, Customers are forwarded to the Queue Server 520. As the Customer is new, the product choice and any other information gathered is stored 524 (in a database in the Queue Server in the case of the Telephone system, or on the user's machine as a cookie in the case of the Internet system). A new Request Number is generated 526, and stored, and is compared to the current Service Number 528.

If the Request Number is less than the Service Number, the Customer is forwarded to the Payment System for processing 546.

If the Request Number is greater than the Service Number, then the Customer is given queue information 534. In the Internet case, this is typically a webpage showing the Customer's Request Number, the current Service Number and an estimated wait time. In the Telephone case, this information is read to the Customer. The Customer is now queued.

This response may also include information allowing the Customer to return to the queuing system from another point of sale, and be recognized 536. This varies by system:

- for the Telephone system, Recognition Information is usually the Customer's telephone number, and may also include the Customer's Request Number, and optionally an automatically generated Confirmation Code.
- for the Internet system, usually no Recognition Information is sent, but the Customer may be asked to enter their telephone number if they wish to buy product by phone later. This Recognition Information is then stored.

The Customer may optionally request to be notified when they reach the front of the queue (specifically, when their Request Number becomes less than the Service Number). In this case, the Customer enters their telephone number and email address (internet system only; on the phone system the telephone number is already known) 538. The queue system waits for the Customer's Request Number to become eligible for service 540, and sends an SMS text message and/or email to the Customer 542.

Notification messages may also be sent if additional product becomes available at a later date (not shown).

Customers returning to the system 504 as a result of receiving one of these messages, or a subsequent phone call, or an automatic page refresh, are represented by the Initial State marked as Returning Customer.

Returning Customers may arrive through the same point of sale (i.e. they have already joined the queue by Internet, and are returning over Internet), or may arrive through a different point of sale (i.e. joined the queue by Internet, and are returning by calling the helpline).

Depending on the specific points of sale involved 514, the Customer may need to enter Recognition Information in order for the system to retrieve the Request Number the Customer received earlier 516. In many cases this Recognition Information, and the associated Request Number, may be retrieved automatically.

Once the Request Number has been retrieved 530, it is checked for validity as a fraud prevention measure 532. If the Customer's information fails the validity check, the Customer is issued a new Request Number 526, and is effectively sent to the back of the queue.

If the Request Number is retrieved and successfully validated, the Request Number is compared to the current Service Number 528. If the Request Number is still greater than the Service Number, the Customer is sent updated queue information 534, including an updated wait time.

If the Request Number is now less than the Service Number, the Customer is sent to the Payment System for processing 546. All gathered information is also sent to the Payment System, where it may be stored or otherwise processed.

The Payment System may use this information to check that the arriving Customer has passed through the queue system 548. This is particularly important on the Internet, where care must be taken to prevent users from arriving at the Payment System directly. The Payment System may perform this check itself, or may send a message to the queue server requesting validation (not shown).

Once the Customer is successfully validated, the Payment System asks the Customer for credit card details 550. These may be checked against Personal Information gathered by the system before entering the queue to provide further fraud protection (not shown).

Assuming the credit card information is successfully processed, the Queue Server may be notified that the purchase has taken place 556, in order to prevent the same Customer purchasing product multiple times (particularly important in ticket tout prevention). The order is then complete 558.

As will be apparent to the reader, various stages of the customer flow described above may be omitted, replaced or augmented. Furthermore, there is flexibility in the "actor" at which many of the stages of the flowchart are carried out, and the order in which the stages are executed.

In the models so far described, it has assumed that each point of sale, such as telephone or internet, represents a separate domain; that is there is a separate allocation of tickets to each point of sale, and that Request Numbers and Service Numbers increment for each separately.

These assumptions are reasonable, and may indeed be necessary in the case of a heavily oversubscribed sale, in which the Internet Queue is likely to fill very much more quickly than the Telephone Queue.

Tighter integration may be achieved in a number of areas, in particular: Service Numbers; Request Numbers; and Domain Switching.

The Service Number indicates which customers are eligible to buy tickets. Typically, the Service Number is incremented at the maximum rate that the Target Service Host can sell tickets. This is likely to be faster for the Internet than the Telephone, particularly when human phone operators are taking the payment details.

In cases where a single Service Number for all points of sale is required, this should be chosen to increment at the rate of the slowest Target Service Host (usually the telephone).

Changes to the Service Number can be made using an administrative interface for the queuing system, or through automatically generated messages as before, and the system can be configured to propagate these changes to all the other queue servers managing the different points of sale, if desired.

Request Numbers are usually issued in ascending order for a particular domain (though some numbers may be skipped). This means that a person receiving Request Numbers through one source, such as the Telephone, may be able to use that number to enter the Internet queue at a lower position.

Note that this does not violate first-come, first-served, as the person is simply using a validly-acquired place in the queue to buy tickets through another means. However, in circumstances where this is seen as undesirable for other reasons, a mechanism for periodically synchronising Request Numbers across domains or points of sale may be provided.

Consider a situation where a (single) internet queue has issued Request Numbers 1,2,3...100, and a telephone queue has issued numbers 1,2,3...10. The telephony queue server sends a message to the internet queue server indicating that it has queued 10 people. The Internet queue server reacts by skipping ten Request Numbers, so that the next new customer to arrive is issued Request Number 111.

Subsequent messages from the Telephony queue server indicate the number of people queued since the last message sent. The Internet queue server continues to react by skipping this number of people.

Where multiple points of sale are involved, one point of sale server is designated the 'skipper', and the rest send 'skip' messages to that server. Usually, the server queuing people the most rapidly should be the 'skipper', and this will usually be the Internet queue server.

It is recommended that 'skip' messages are only sent at most once every ten seconds to increase performance, however it is also possible to send 'skip' messages for every new queuer if desired.

Domain Switching can benefit from integration. In cases where, for example, Internet and Telephone sales are regarded as separate domains, customers who use the internet to join the queue and the telephone to buy their tickets (or vice versa) are known as Domain Switchers.

It is possible to track the original domain that gave the Request Number that is being used to buy tickets across queue servers, so that when tickets are sold to Domain Switchers, the correct sales tracking information is updated, and people from the switched-to domain are not unfairly excluded from buying tickets.

In certain embodiments, the present invention can facilitate purchases of groups of tickets - where this is deemed appropriate. It is often the case that groups of people all wish to attend the same event. In heavily over-subscribed sales, it may be difficult for the whole group to receive tickets. In a conventional system, the probability of the entire group being able to buy tickets is given by $p^n$, where n is the number of people in the group, and p is the total number of tickets available divided by the total number of people who want them. For instance, in a situation where there are four times as many people who wish to go as there are tickets, the chances that a group of ten people will all receive tickets are roughly a million to one!

This may lead to problems, as the members of the group that have received tickets later decide that they do not wish to go because other members of the group have been excluded. In addition to the customer dissatisfaction, this also encourages these members to sell their tickets (become touts).

If, however, the queuing system of the invention is used, and the group is organised so that they all attempt to join the queue substantially simultaneously, this may increase the chances of the group receiving tickets, however this cannot be guaranteed.

To combat this problem, a subsystem of the queueing system has been developed.

To use this system, groups of people must register with the queuing system (through any point of sale) before the queue is opened (usually when tickets go on sale).

The first member of the group to register is given, or chooses, a unique Group Code, which that person shares with the rest of the group.

Subsequent members of the group then enter this Group Code into the system when they register.

Personal information, such as the last four numbers of each member's credit card, is also taken when the members of the group register, to prevent places in the group being traded. The maximum size of the group may be limited if desired.

When the queue opens, all members of the group should try to join it as soon as possible in order for the group to have the best chance of receiving tickets.

The first member of the group to join the queue is given a Request Number as before.

Subsequent members of the group joining the queue are given this same Request Number.

Once this Request Number becomes eligible for service, all members of the group should complete their purchase before tickets sell out as before.

If the internet is used to join the queue, it is possible for the system to recognize members of the group as they join the queue through the use of cookies or other storage technology (such as bookmarks/favourites).

If other points of sale are used, members may need to re-enter their group code in order to be recognized. Optionally, members may be prompted to re-enter their personal information in addition to the group code in order to discourage fraudulent use.

Note that this may violate the strictest definition of first-come, first-served, and large groups may be favoured over smaller ones. However, in physical queues, it is usual for people to save places for their friends, so this may be seen as acceptable.

The preceding discussion has in the main been concerned with high-load sales applications of the system of the invention. The system can also be applied to error based queuing. While most online businesses do not sell tickets, all online businesses use similar technologies to facilitate the purchase of product (goods or services). The queuing solution presented can also be used to prevent loss of business when these technologies fail.

Specifically, most online businesses use a web server to present web pages, a database to store product and order information, a payment gateway to process credit card details, and (usually) an application server to integrate these subsystems.

Problems occur when any or all of these subsystems fail. For instance, if a payment gateway is unavailable, perhaps due to a server restart, or hardware reboot, or network failure, or some other reason, people find themselves unable to make purchases, even though the rest of the system may be working correctly. Similarly, if the database server is down, then customers will also not be able to place orders.

In these circumstances, frustrated customers will often buy product from other suppliers, and are unlikely to return to the web site they perceive as faulty. So, even a routine maintenance operation, which may take down a component of the system for only a minute or two, may cause permanent loss.

The system of the invention addresses these issues. Firstly, when a component of an eCommerce site is failing, users are normally presented with some kind of error message. The specific message shown will depend on the component failing and the rest of the architecture of the eCommerce site, however site administrators do usually have control over the message shown.

In short, site administrators use the queue system to replace the error message (which would usually be generated for the customer) with instructions to send the customer to the queue server. The queue system responds by placing the customer in a queue. Any subsequent customers are held in this queue until the problem is fixed, at which point they are returned to the Target Service Host at a rate it can handle.

The mechanism for this is as follows.

First, when the customer is sent to the queue server (for instance, through JavaScript, an HTTP redirection header or some other means), the redirection contains the following information:

1) Information regarding the nature of the original error (usually an error code),
2) A target URL to send customers to once the error is fixed,
3) A test URL used to determine whether the problem has been fixed,
4) A delay time,
5) An email address and/or telephone number for the site administrators, and/or
6) Any additional information required by the Site Administrators.

Any or all of these may be preconfigured to default values by the site administrators and then omitted from the redirection email. All this information is stored using the processes described above.

On receiving the first customer from a failing site, the queue server sends an email and/or SMS text to the site administrators indicating that a problem has occurred that needs fixing. An error code may be included in this message.

Next, the queue server issues a Request Number to the customer and shows a queue page as before. A timer is started. Subsequent customers arriving because of the error are issued further Request Numbers and join the queue as before. The queue page is configurable, so that Site Administrators have control over any messages shown.

Once the timer has reached the delay time, the next customer to reach the queue servers (either as a new arrival, or as a customer who is already queued whose queue page is automatically refreshing) is labelled by the system as a Tester, through the use of a persistent cookie or other means. The Tester is sent to the Test URL, which is a web page on the Target Service Host (a webpage that became unavailable due to an error or failure of a component of the e-commerce system). The information stored when the Tester joined the queue is also sent along with this request to the Target Service Host. Another timer is started on the queue server.

The Target Service Host uses the sent information to test whether the failing component is now working. The Target Service Host may do this by, for instance, reconstructing the original request that resulted in error, and reprocessing it.

If the error occurs again, the customer is immediately returned to the queue server.

If the error does not recur, the Target Service Host indicates that the problem has been fixed either:

by sending a message to the queue server directly, or by causing the customer's web browser to request a particular URL from the queue server that indicates that the problem has been fixed, or
by not returning the Tester to the queue server, which detects the absence of the Tester after a certain amount of time.

If the error is still occurring, the queue server removes the information that demarcates the Tester from the rest of the customers, and continues to hold all customers for another fixed period of time, and then repeats the process.

Once the error has been fixed, however, the tester is forwarded to the Target URL either by the Target Service Host, or (optionally) by the queue server, and the rest of the customers in the queue are also sent through to the Target URL as before, until there are none left in the queue, and an email or SMS text is sent to the Site Administrators indicating that the problem has been fixed.

If the error reoccurs during this process, then the customer experiencing the error is sent to the queue server as before, which responds by holding all queued customers again until the error is fixed, using the testing mechanism described above.

Optionally, Site Administrators may also specify to the queue servers that the problem has been fixed manually, bypassing the automatic testing.

Optionally, the queue servers may also be configured to send requests to the Target Service Host to perform testing directly, rather than by sending customers to the Test URL as described above.

The queuing system of the invention may therefore be deployed to address problems in both internet and telephonic queue management, where high load, dealing with multiple points of sale, and/or system failures cause inefficiency and/or failure, thereby providing reduction of risk and costs to Site Administrators, and a greatly improved experience for customers. In addition, the queuing system addresses problems arising from ticket touts, cancellations, and group ticketing. The invention is however not limited to applications in e-commerce and telephony, it encompasses the queuing of requests for services and/or products in any communications network.

Furthermore, although many of the specific examples given above relate to queuing systems for purchase of tickets, it will be apparent that the invention is not limited to these specific examples. The invention may equally be used in the management of queues for the purchase of products and/or services. The invention also applies to the queuing of users where access to a service is prevented by failure or malfunction rather than demand that outstrips capacity.

**Claims**

1. A method for managing requests for service to a service host (22) over a telephone communications network, the method comprising the steps of:

receiving (502) from a customer terminal (20) via the telephone communications network a request for service to be supplied by the service host (22);
allocating (526) a queue identifier to the request for service;
receiving (504) from the customer terminal a subsequent request for service to be supplied by the service host (22);
retrieving (530) the queue identifier for the request for service;
performing a comparison (528) between the queue identifier and queue status information; and
passing (546) to the service host (22) the request for service in accordance with the result of the comparison,
**characterised in that** the steps of the method are performed at a queue server (30,520) and the step of allocating (526) the queue identifier to the request for service is performed independently of whether the request for service is currently eligible for service by the service host (22).

2. A method according to claim 1, wherein the queue identifier is stored in a database and is associated with a telephone number of the customer terminal (20).

3. A method according to claim 2, wherein the queue identifier is retrieved (530) from the database following the subsequent request for service

4. A method according to any preceding claim, wherein the step of passing (546) the request for service to the service host comprises connecting a call from the customer terminal (20) to the service host (22).

5. A method according to any preceding claim, further comprising the step of performing an initial comparison (528) between the queue identifier and queue status information after the queue identifier has been allocated (526) to the request for service.

6. A method according to claim 5, further comprising the step of notifying (534) the customer terminal (20) that the request has been enqueued after performing the initial comparison.

7. A method according to claim 6, further comprising the step of providing (534) the customer terminal (20) with access to the queue identifier.

8. A method according to claim 7, wherein access to information specific to the customer terminal (20) is provided with access to the queue identifier.

9. A method for managing requests for service to a service host (22) over an Internet communications network, the method comprising the steps of:

    receiving (502) from a customer terminal (20) via the Internet communications network a request for service to be supplied by the service host (22);
    allocating (526) a queue identifier to the request for service;
providing (534) the customer terminal (20) with access to the queue identifier;
receiving (504) from the customer terminal the queue identifier as part of a subsequent request for service to be supplied by the service host (22);
performing a comparison (528) between the queue identifier and queue status information; and
passing (546) to the service host (22) the request for service in accordance with the result of the comparison,
**characterised in that** the steps of the method are performed at a queue server (30,520) and the step of allocating (526) the queue identifier to the request for service is performed independently of whether the request for service is currently eligible for service by the service host (22).

10. A method according to claim 9, wherein the step of passing (546) the request for service to the service host (22) comprises providing the customer terminal (20) access to a target page on the service host (22).

11. A method according to claim 9 or claim 10, wherein after a request for service is allocated a queue identifier but prior to providing access to the queue identifier to the customer terminal (20), an initial comparison between the queue identifier and queue status information is performed and the request for service is passed to the service host (22) in accordance with the result of the initial comparison.

12. A method according to any one of claims 9 to 11, wherein access to information specific to the customer terminal (20) is provided with access to the queue identifier.

13. A method according to any one of claims 7 to 12, further comprising the step of providing the customer terminal (20) with access to additional information relating to the queue.

14. A method according to claim 13, wherein the additional information includes a service number, the service number being an indication of the queue identifier currently being served.

15. A method according to claim 14, wherein the service number is automatically incremented at a constant rate.

16. A method according to claim 14, wherein the service number is automatically incremented, the rate of increment being varied in dependence on the number of requests for service passed to the service host (22).

**17.** A method according to claim 14, wherein the service number is incremented in response to messages from the service host (22).

**18.** A method according to any preceding claim, wherein the queue identifier is a number and is allocated on a sequential basis.

**19.** A method according to any preceding claim, further including the step of checking (548) at the service host that the request for service has been passed from the queue server (30,520).

**20.** A method according to any preceding claim, further including the step of automatically deleting the queue identifier and any encrypted string from the customer terminal (20) following the provision of service by the service host (22).

**21.** A method according to any preceding claim, wherein requests for service are received by a plurality of queue servers (42), further comprising the step of allocating the request for service from the customer terminal (44) to a particular queue server (42) in accordance with a predetermined metric.

**22.** A method as claimed in any preceding claim, wherein the queue identifier corresponds to one of a plurality of queues.

**23.** A method according to claim 22, further comprising balancing customer load (43) between the queues.

**24.** A method according to claim 22 or claim 23, wherein each queue corresponds to a given domain within the communications network.

**25.** A method as claimed in claim 24, wherein each domain corresponds to a geographical area.

**26.** A method as claimed in claim 24 or claim 25, further comprising the steps of:

   querying the customer terminal for a domain identifier;
   receiving the domain identifier from the customer terminal; and
   after the request for service is passed to the service host, checking that the domain identifier corresponds to domain information subsequently provided by the customer terminal when the request of service is passed to the service host.

**27.** A method as claimed in any of the preceding claims, further comprising the step of:

   receiving a further request for service from a further customer terminal via the communications network, the further customer terminal being of a different type to the customer terminal (20).

**28.** A method according to any preceding claim, wherein the customer terminal (20) is operated by a user, the method further comprising the steps of:

   associating a customer identifier with each user;
   receiving the customer identifier from the user; and
   validating the customer identifier, thereby confirming that the user is a returning customer.

**29.** A method as claimed in claim 28, wherein the customer identifier is a customer terminal identifier that identifies a given customer terminal (20), and wherein the step of validating the customer identifier includes checking whether a further customer terminal, from which a request for service has been received, matches the previously allocated customer terminal identifier.

**30.** A method as claimed in claim 28 or claim 29, wherein the step of associating the customer identifier with each user includes maintaining a queue database of customer identifiers, and wherein the step of validating the customer identifier includes comparing the customer terminal identifier for the customer terminal (20) with each entry in the queue database and, where the customer terminal (20) matches an entry in the queue database, confirming that the user is a returning customer.

**31.** A method as claimed in claim 28 or claim 29, wherein the step of associating the customer identifier with each user includes obtaining further customer identification information, and wherein the step of validating the customer identifier includes validating the customer identifier against the further customer information.

**32.** A method according to any one of claims 28 to 31, wherein the step of associating the customer identifier with the user includes:

   receiving customer information from the user;
   generating a unique confirmation code for the user using the customer information; and,
   allocating the confirmation code to the user.

**33.** A method according to claim 32, wherein the customer identifier received from the customer terminal includes the confirmation code and wherein the step of validating the customer identifier includes checking the confirmation code is a valid confirmation code, thereby allowing a plurality of customers to use the same customer terminal (20).

**34.** A method according to any of the preceding claims, further comprising the step of notifying (534) the customer when the result of the comparison between the queue identifier and the queue status information indicates that the request for service should be passed to the service host (22).

**35.** A method according to any one of the preceding claims, wherein the queue status information indicates whether any or all subsystems of the service host (22) have failed.

**36.** A method according to any one of the preceding claims, further comprising the steps of:

in advance of the comparison step (534), altering the queue status information to indicate that the requested service has been exhausted so that the request for service is prevented from being passed to the service host (22); and when the requested service becomes available, altering the queue status information to indicate whether the request for service should be passed to the service host (22).

**37.** A computer program product having computer executable code stored thereon for causing a computer to perform the method of any preceding claim when being executed by the computer.

**38.** A system for managing requests for service from a customer terminal (20) to a service host (22) over a telephone communications network, the system comprising a server (30,520) for receiving from the customer terminal (20) via the telephone communications network a request for service to be supplied by the service host (22), the server including:

means for receiving (502) a request for service from the customer terminal (20); means to allocate (526) a queue identifier to the request for service; means for generating queue status information; means for retrieving (530) the queue identifier following a subsequent request for service from the customer terminal (20); means to perform a comparison (528) between the queue status information and the queue identifier; and, means for passing (546) the request for service to the service host in dependence on the result of the comparison, **characterised in that** the server is a queue server (30,520) and the means for allocating (526) the queue identifier to the request for service is adapted to allocate (526) the queue identifier independently of whether the request for service is currently eligible for service by the service host (22).

**39.** A system according to claim 38, further comprising means for storing the queue identifier in a database on behalf of the customer terminal (20) and wherein the means for retrieving (530) the queue identifier retrieves it from the database.

**40.** A system according to claim 38 or claim 39, wherein the means for passing the request for service is adapted to connect a call from the customer terminal (20) to the service host (22).

**41.** A system according to any one of claims 38 to 40, wherein the means for performing a comparison (528) is adapted, in use, to perform an initial comparison between the queue identifier and queue status information after the means for allocating (526) has allocated the queue identifier to the request for service.

**42.** A system according to claim 41, further comprising means for notifying (534) the customer terminal (20) that the request has been enqueued after performing the initial comparison.

**43.** A system according to any one of claims 38 to 42, further comprising means for providing (534) the customer terminal (20) with access to the queue identifier.

**44.** A system for managing requests for service from a customer terminal (20) to a service host (22) over an Internet communications network, the system comprising a server (30,520) for receiving from the customer terminal (20) via the Internet communications network a request for service to be supplied by the service host (22), the server including:

means for receiving (502) a request for service from the customer terminal (20); means to allocate (526) a queue identifier to the request for service; means for providing (534) the customer terminal (20) with access to the queue identifier; means for generating queue status information; means for receiving (530) the queue identifier as part of a subsequent request for service from the customer terminal (20); means to perform a comparison (528) between the queue status information and the queue identifier; and, means for passing (546) the request for service to the service host (22) in dependence on the result of the comparison, **characterised in that** the server is a queue server (30,520) and the means for allocating (526) the queue identifier to the request for service is adapted to allocate (526) the queue identifier independently of whether the request for service is currently eligible for service by the service host (22).

45. A system according to claim 44, wherein the means for passing the request for service is adapted to provide the customer terminal (20) with access to a target page on the service host (22).

46. A system according to claim 44 or claim 45, wherein, in use, after the request for service is allocated a queue identifier, but prior to providing access to the queue identifier to the customer terminal (20), the means to perform a comparison (528) is adapted to perform an initial comparison between the queue identifier and queue status information, and the means for passing (546) the request for service to the service host (22) is adapted to do so in accordance with the result of the initial comparison.

47. A system according to claim 46, further comprising means for notifying (534) the customer terminal (20) that the request has been enqueued after performing the initial comparison.

48. A system according to any one of claims 43 to 47, wherein the means for providing the customer terminal (20) with access to the queue identifier is adapted to provide (534) access to additional information relating to the queue to the customer terminal (20) with the queue identifier.

49. A system according to claim 48, wherein the additional information includes a service number, the service number being an indication of the queue identifier currently being served.

50. A system according to claim 49, wherein, in use, the queue server (30,520) increments the service number automatically at a constant rate.

51. A system according to claim 49, wherein, in use, the queue server (30,520) increments the service number automatically, the rate of increment being varied in dependence on the number of requests for service forwarded to the service host (22).

52. A system according to any one of claims 43 to 51, wherein the means to provide access (534) to the queue identifier to the customer terminal (20) is adapted to provide access to information specific to the customer terminal (20) with the queue identifier.

53. A system according to any one of claims 43 to 52, wherein the subsequent request for service from the customer terminal (20) is initiated automatically by code sent to the customer terminal (20) when access to the queue identifier is provided.

54. A system according to any one of claims 38 to 53, wherein queue identifiers are numbers and are allocated on a sequential basis.

55. A system according to any one of claims 38 to 54, further including means for checking at the service host (22) that the request for service has been passed from the queue server (30,520).

56. A system according to any one of claims 38 to 55, further including means for automatically deleting the queue identifier and any encrypted string from the customer terminal (20) following the provision of service by the service host (22).

57. A system according to any one of claims 38 to 56, further comprising means for automatically refusing requests for service after a predetermined number of requests for service have been passed to the service host (22).

58. A system according to any one of claims 38 to 57, comprising a plurality of queue servers (42), and means for allocating requests for service from customer terminals (44) to a particular queue server (42) in accordance with a predetermined metric.

**Patentansprüche**

1. Verfahren zur Verwaltung von Dienstanforderungen an einen Service-Host (22) über ein Telefonkommunikationsnetz, wobei das Verfahren folgende Schritte umfasst:

Empfangen (502) einer vom Service-Host (22) zu liefernden Dienstanforderung ab einem Teilnehmerendgerät (20) über das Telefonkommunikationsnetz;
Zuteilen (526) eines Warteschlangenbezeichners an die Dienstanforderung;
Empfangen (504) einer vom Service-Host (22) zu liefernden nachfolgenden Dienstanforderung von einem Teilnehmerendgerät;
Abrufen (530) der Warteschlangenkennung für die Dienstanforderung;
Ausführen eines Vergleichs (528) zwischen der Warteschlangenkennung und der Warteschlangen-Statusinformation; und
Weiterleiten (546) der Dienstanforderung in Übereinstimmung mit dem Ergebnis des Vergleichs an den Service-Host (22),
**dadurch gekennzeichnet, dass** die Verfahrensschritte an einem Warteschlangenserver (30, 520) ausgeführt werden und dem Schritt der Zuteilung (526) der Warteschlangenkennung an die Dienstanforderung unabhängig davon ausgeführt wird, ob die Dienstanforderung derzeitig für Dienst vom Service-Host (22) berechtigt ist.

2. Verfahren nach Anspruch 1, wobei die Warteschlangenkennung in einer Datenbank gespeichert ist und mit einer Telefonnummer des Teilnehmerendgeräts (20) assoziiert ist.

3. Verfahren nach Anspruch 2, wobei die Warteschlangenkennung anschließend an die nachfolgende Dienstanforderung aus der Datenbank abgerufen (530) wird.

4. Verfahren nach einem vorangehenden Anspruch, wobei der Schritt der Weiterleitung (546) der Dienstanforderung an den Service-Host das Verbinden eines Anrufs vom Teilnehmerendgerät (20) an den Service-Host (22) umfasst.

5. Verfahren nach einem vorangehenden Anspruch, das ferner den Schritt der Ausführung eines anfänglichen Vergleichs (528) zwischen der Warteschlangenkennung und Warteschlangen-Statusinformation umfasst, nach dem die Warteschlangenkennung der Dienstanforderung zugeteilt (526) worden ist.

6. Verfahren nach Anspruch 5, das ferner den Schritt der Benachrichtigung (534) des Teilnehmerendgeräts (20) umfasst, dass die Anforderung nach Ausführen des anfänglichen Vergleichs eingereiht worden ist.

7. Verfahren nach Anspruch 6, das ferner den Schritt umfasst, dem Teilnehmerendgerät (20) Zugriff auf die Warteschlangenkennung bereitzustellen (534).

8. Verfahren nach Anspruch 7, wobei Zugriff auf Information, die für das Teilnehmerendgerät (20) spezifisch ist, mit Zugriff auf die Warteschlangenkennung bereitgestellt wird.

9. Verfahren zur Verwaltung von Dienstanforderungen an einen Service-Host (22) über ein Internetkommunikationsnetz, wobei das Verfahren folgende Schritte umfasst:

Empfangen (502) einer vom Service-Host (22) zu liefernden Dienstanforderung von einem Teilnehmerendgerät (20) über das Internetkommunikationsnetz;
Zuteilen (526) einer Warteschlangenkennung an die Dienstanforderung;
Versehen (534) des Teilnehmerendgeräts (20) mit Zugriff auf die Warteschlangenkennung;
Empfangen (504) der Warteschlangenkennung vom Teilnehmerendgerät als Teil einer vom Service-Host (22) zu liefernden nachfolgenden Dienstanforderung;
Ausführen eines Vergleichs (528) zwischen der Warteschlangenkennung und der Warteschlangen-Statusinformation; und
Weiterleiten (546) der Dienstanforderung in Übereinstimmung mit dem Ergebnis des Vergleichs an den Service-Host (22),
**dadurch gekennzeichnet, dass** die Verfahrensschritte an einem Warteschlangenserver (30, 520) ausgeführt werden und dem Schritt der Zuteilung (526) der Warteschlangenkennung an die Dienstanforderung unabhängig davon ausgeführt wird, ob die Dienstanforderung derzeitig für Dienst vom Service-Host (22) berechtigt ist.

10. Verfahren nach Anspruch 9, wobei der Schritt der Weiterleitung (546) der Dienstanforderung an den Service-Host (22) umfasst, dem Teilnehmerendgerät (20) Zugriff auf eine Zielseite auf dem Service-Host (22) bereitzustellen.

11. Verfahren nach Anspruch 9 oder Anspruch 10, wobei, nach dem einer Dienstanforderung eine Warteschlangenkennung zugeteilt wird, aber bevor dem Teilnehmerendgerät (20) Zugriff auf die Warteschlangenkennung bereitgestellt wird, ein anfänglicher Vergleich zwischen der Warteschlangenkennung und der Warteschlangen-Statusinformation ausgeführt wird und die Dienstanforderung in Übereinstimmung mit dem Ergebnis des anfänglichen Vergleichs an den Service-Host (22) weitergeleitet wird.

12. Verfahren nach einem der Ansprüche 9 bis 11, wobei Zugriff auf Information, die für das Teilnehmerendgerät (20) spezifisch ist, mit Zugriff auf die Warteschlangenkennung bereitgestellt wird.

13. Verfahren nach einem der Ansprüche 7 bis 12, das ferner den Schritt umfasst, dem Teilnehmerendgerät (20) Zugriff auf zusätzliche Information bezüglich der Warteschlange bereitzustellen.

14. Verfahren nach Anspruch 13, wobei die zusätzliche Information eine Dienstnummer einschließt, wobei die Dienstnummer eine Anzeige der Warteschlangenkennung ist, die gerade bedient wird.

15. Verfahren nach Anspruch 14, wobei die Dienstnummer mit einer konstanten Rate automatisch inkrementiert wird.

16. Verfahren nach Anspruch 14, wobei die Dienstnummer automatisch inkrementiert wird, wobei die Inkrementierungsrate in Abhängigkeit der Zahl von Dienstanforderungen variiert wird, die an den Service-Host (22) weitergeleitet werden.

17. Verfahren nach Anspruch 14, wobei die Dienstnummer als Reaktion auf Nachrichten vom Service-Host (22) inkrementiert wird.

18. Verfahren nach einem vorangehenden Anspruch, wobei die Warteschlangenkennung eine Zahl ist und auf einer sequenziellen Basis zugeteilt wird.

19. Verfahren nach einem vorangehenden Anspruch, das ferner den Schritt der Überprüfung (548) am Service-Host einschließt, dass die Dienstanforderung ab dem Warteschlangenserver (30, 520) weitergeleitet worden ist.

20. Verfahren nach einem vorangehenden Anspruch, das ferner den Schritt einschließt, die Warteschlangenkennung und jegliche verschlüsselte Zeichenfolge im Anschluss an die Bereitstellung von Dienst seitens des Service-Hosts (22) automatisch aus dem Teilnehmerendgerät (20) zu löschen.

21. Verfahren nach einem vorangehenden Anspruch, wobei Dienstanforderungen von einer Vielzahl von Warteschlangenservern (42) empfangen werden, das ferner den Schritt der Zuteilung der Dienstanforderung vom Teilnehmerendgerät (44) an einen speziellen Warteschlangenserver (42) in Übereinstimmung mit einer vorgegebenen Metrik umfasst.

22. Verfahren, wie in einem vorangehenden Anspruch beansprucht, wobei die Warteschlangenkennung einer von einer Vielzahl von Warteschlangen entspricht.

23. Verfahren nach Anspruch 22, das ferner das Ausgleichen der Teilnehmerlast (43) zwischen Warteschlangen umfasst.

24. Verfahren nach Anspruch 22 oder Anspruch 23, wobei jede Warteschlange einer gegebenen Domäne innerhalb des Kommunikationsnetzes entspricht.

25. Verfahren, wie in Anspruch 24 beansprucht, wobei jede Domäne einem geografischen Gebiet entspricht.

26. Verfahren, wie in Anspruch 24 oder Anspruch 25 beansprucht, das ferner folgende Schritte umfasst:

Abfragen des Teilnehmerendgeräts nach einer Domänenkennung;
Empfangen der Domänenkennung vom Teilnehmerendgerät; und
nach dem die Dienstanforderung an den Service-Host weitergeleitet wurde, Überprüfen, dass die Domänenkennung der Domäneninformation entspricht, die nachfolgend vom Teilnehmerendgerät bereitgestellt wird, wenn die Dienstanforderung an den Service-Host weitergeleitet ist.

27. Verfahren, wie in einem der vorangehenden Ansprüche beansprucht, das ferner den folgenden Schritt umfasst:

Empfangen einer weiteren Dienstanforderung von einem weiteren Teilnehmerendgerät über das Kommunikationsnetz, wobei das weitere Teilnehmerendgerät eines vom Teilnehmerendgerät (20) unterschiedlichen Typs ist.

28. Verfahren nach einem vorangehenden Anspruch, wobei das Teilnehmerendgerät (20) von einem Benutzer betrieben wird, wobei das Verfahren ferner folgende Schritte umfasst:

Assoziieren einer Teilnehmerkennung mit jedem Benutzer;
Empfangen der Teilnehmerkennung vom Benutzer; und
Validieren der Teilnehmerkennung, wodurch bestätigt wird, dass der Benutzer ein wiederkehrender Teilnehmer ist.

29. Verfahren, wie in Anspruch 28 beansprucht, wobei die Teilnehmerkennung eine Kennung für ein Teilnehmerendgerät ist, die ein gegebenes Teilnehmerendgerät (20) identifiziert und, wobei der Schritt der Validierung der Teilnehmerkennung die Überprüfung einschließt, ob ein weiteres Teilnehmerendgerät, von dem eine Dienstanforderung empfangen worden ist, der vorher zugeteilten Kennung des Teilnehmerendgeräts entspricht.

30. Verfahren, wie in Anspruch 28 oder Anspruch 29 beansprucht, wobei der Schritt der Assoziierung der Teilnehmerkennung mit jedem Benutzer die Aufrechterhaltung einer Warteschlangendatenbank von Teilnehmerkennungen einschließt und, wobei der Schritt der Validierung der Teilnehmerkennung das Vergleichen der Kennung des Teilnehmerendgeräts für das Teilnehmerendgerät (20) mit jedem Eintrag in die Warteschlangendatenbank einschließt und, wo das Teilnehmerendgerät (20) einem Eintrag in der Warteschlangendatenbank entspricht, Bestätigen, das der Benutzer ein wiederkehrender Teilnehmer ist.

31. Verfahren, wie in Anspruch 28 oder Anspruch 29 beansprucht, wobei der Schritt der Assoziierung der Teilnehmerkennung mit jedem Benutzer, das Erlangen weiterer Teilnehmeridentifikationsinformation einschließt und, wobei der Schritt der Validierung der Teilnehmerkennung das Validieren der Teilnehmerkennung gegen die weitere Teilnehmerinformation einschließt.

**32.** Verfahren nach einem der Ansprüche 28 bis 31, wobei der Schritt der Assoziierung der Teilnehmerkennung mit dem Benutzer einschließt:

Empfangen von Teilnehmerinformation vom Benutzer;
Generieren eines einzigartigen Bestätigungscodes für den Benutzer unter Verwendung der Teilnehmerinformation; und,
Zuteilen des Bestätigungscodes an den Benutzer.

**33.** Verfahren nach Anspruch 32, wobei die vom Teilnehmerendgerät empfangene Teilnehmerkennung den Bestätigungscodes einschließt und, wobei der Schritt der Validierung der Teilnehmerkennung die Überprüfung einschließt, dass der Bestätigungscode ein gültiger Bestätigungscode ist, dadurch wird einer Vielzahl von Teilnehmern ermöglicht, das gleiche Teilnehmerendgerät (20) zu benutzen.

**34.** Verfahren nach einem der vorangehenden Ansprüche, das ferner den Schritt der Benachrichtigung (534) des Teilnehmers umfasst, wenn das Ergebnis des Vergleichs zwischen der Warteschlangenkennung und der Warteschlangen-Statusinformation anzeigt, dass die Dienstanforderung an den Service-Host (22) weitergeleitet werden sollte.

**35.** Verfahren nach einem der vorangehenden Ansprüche, wobei die Warteschlangen-Statusinformation anzeigt, ob irgendwelche oder alle Subsysteme des Service-Hosts (22) versagt haben.

**36.** Verfahren nach einem der vorangehenden Ansprüche, das ferner folgende Schritte umfasst:

im Vorgriff auf den Vergleichsschritt (534), Ändern der Warteschlangen-Statusinformation, um anzuzeigen, dass der angeforderte Dienst ausgeschöpft worden ist, sodass die Dienstanforderung daran gehindert wird, an den Service-Host (22) weitergeleitet zu werden; und wenn der angeforderte Dienst verfügbar wird, Ändern der Warteschlangen-Statusinformation, um anzuzeigen, ob die Dienstanforderung an den Service-Host (22) weitergeleitet werden sollte.

**37.** Computerprogrammprodukt mit darauf gespeichertem computerausführbarem Code, um zu bewirken, dass ein Computer das Verfahren eines beliebigen vorangehenden Anspruchs durchführt, wenn vom Computer ausgeführt.

**38.** System zur Verwaltung von Dienstanforderungen von einem Teilnehmerendgerät (20) an einen Service-Host (22) über ein Telefonkommunikationsnetz, wobei das System einen Server (30, 520) zum Empfangen einer Dienstanforderung ab dem Teilnehmerendgerät (20) über das Telefonkommunikationsnetz umfasst, die vom Service-Host (22) zu liefern ist, wobei der Server einschließt:

Mittel zum Empfangen (502) einer Dienstanforderung vom Teilnehmerendgerät (20);
Mittel zum Zuteilen (526) einer Warteschlangenkennung an die Dienstanforderung;
Mittel zum Generieren von Warteschlangen-Statusinformation;
Mittel zum Abrufen (530) der Warteschlangenkennung im Anschluss an eine nachfolgende Dienstanforderung vom Teilnehmerendgerät (20);
Mittel zum Ausführen eines Vergleichs (528) zwischen der Warteschlangen-Statusinformation und der Warteschlangenkennung; und,
Mittel zum Weiterleiten (546) der Dienstanforderung an den Service-Host in Abhängigkeit vom Ergebnis des Vergleichs, **dadurch gekennzeichnet, dass** der Server ein Warteschlangenserver (30, 520) ist und das Mittel zur Zuteilung (526) der Warteschlangenkennung an die Dienstanforderung angepasst ist, die Warteschlangenkennung unabhängig davon zuzuteilen (526), ob die Dienstanforderung derzeitig für Dienst vom Service-Host (22) berechtigt ist.

**39.** System nach Anspruch 38, das ferner Mittel zum Speichern der Warteschlangenkennung in einer Datenbank im Namen des Teilnehmerendgeräts (20) umfasst und, wobei das Mittel zum Abrufen (530) der Warteschlangenkennung diese aus der Datenbank abruft.

**40.** System nach Anspruch 38 oder Anspruch 39, wobei das Mittel zum Weiterleiten der Dienstanforderung angepasst ist, einen Anruf vom Teilnehmerendgerät (20) mit dem Service-Host (22) zu verbinden.

**41.** System nach einem der Ansprüche 38 bis 40, wobei das Mittel zum Ausführen eines Vergleichs (528) angepasst ist, im Einsatz, einen anfänglichen Vergleich zwischen der Warteschlangenkennung und der Warteschlangen-Statusinformation auszuführen, nach dem das Mittel zum Zuteilen (526) die Warteschlangenkennung der Dienstanforderung zugeteilt hat.

**42.** System nach Anspruch 41, das ferner Mittel zur Benachrichtigung (534) des Teilnehmerendgeräts (20) umfasst, dass die Anforderung nach Ausführen des anfänglichen Vergleichs eingereiht worden ist.

43. System nach einem der Ansprüche 38 bis 42, das ferner Mittel umfasst, die dem Teilnehmerendgerät (20) Zugriff auf die Warteschlangenkennung bereitstellen (534).

44. System zur Verwaltung von Dienstanforderungen von einem Teilnehmerendgerät (20) an einen Service-Host (22) über ein Internetkommunikationsnetz, wobei das System einen Server (30, 520) zum Empfangen einer Dienstanforderung ab dem Teilnehmerendgerät (20) über das Internetkommunikationsnetz umfasst, die vom Service-Host (22) zu liefern ist, wobei der Server einschließt:

Mittel zum Empfangen (502) einer Dienstanforderung vom Teilnehmerendgerät (20);
Mittel zum Zuteilen (526) einer Warteschlangenkennung an die Dienstanforderung;
Mittel zum Versehen (534) des Teilnehmerendgeräts (20) mit Zugriff auf die Warteschlangenkennung;
Mittel zum Generieren von Warteschlangen-Statusinformation;
Mittel zum Empfangen (530) der Warteschlangenkennung als Teil einer nachfolgenden Dienstanforderung vom Teilnehmerendgerät (20);
Mittel zum Ausführen eines Vergleichs (528) zwischen der Warteschlangen-Statusinformation und der Warteschlangenkennung; und,
Mittel zum Weiterleiten (546) der Dienstanforderung an den Service-Host (22) in Abhängigkeit vom Ergebnis des Vergleichs,
**dadurch gekennzeichnet, dass** der Server ein Warteschlangenserver (30, 520) ist und das Mittel zum Zuteilen (526) der Warteschlangenkennung an die Dienstanforderung angepasst ist, die Warteschlangenkennung unabhängig davon zuzuteilen (526), ob die Dienstanforderung derzeitig für Dienst vom Service-Host (22) berechtigt ist.

45. System nach Anspruch 44, wobei das Mittel zum Weiterleiten der Dienstanforderung angepasst ist, dem Teilnehmerendgerät (20) Zugriff auf eine Zielseite auf dem Service-Host (22) bereitzustellen.

46. System nach Anspruch 44 oder Anspruch 45, wobei, im Einsatz, nach dem der Dienstanforderung eine Warteschlangenkennung zugeteilt wird, aber bevor dem Teilnehmerendgerät (20) Zugriff auf die Warteschlangenkennung bereitgestellt wird, das Mittel zum Ausführen eines Vergleichs (528) angepasst ist, einen anfänglichen Vergleich zwischen der Warteschlangenkennung und der Warteschlangen-Statusinformation auszuführen und das Mittel zum Weiterleiten (546) der Dienstanforderung an den Service-Host (22) angepasst ist, dieses in Übereinstimmung mit dem Ergebnis des anfänglichen Vergleichs zu tun.

47. System nach Anspruch 46, das ferner Mittel zur Benachrichtigung (534) des Teilnehmerendgeräts (20) umfasst, dass die Anforderung nach Ausführen des anfänglichen Vergleichs eingereiht worden ist.

48. System nach einem der Ansprüche 43 bis 47, wobei das Mittel zum Versehen des Teilnehmerendgeräts (20) mit Zugriff auf die Warteschlangenkennung angepasst ist, dem Teilnehmerendgerät (20) mit der Warteschlangenkennung, Zugriff auf zusätzliche Information bereitzustellen (534), die sich auf die Warteschlange bezieht.

49. System nach Anspruch 48, wobei die zusätzliche Information eine Dienstnummer einschließt, wobei die Dienstnummer eine Anzeige der Warteschlangenkennung ist, die gerade bedient wird.

50. System nach Anspruch 49, wobei, im Einsatz, der Warteschlangenserver (30, 520) die Dienstnummer automatisch mit einer konstanten Rate inkrementiert.

51. System nach Anspruch 49, wobei, im Einsatz, der Warteschlangenserver (30, 520) die Dienstnummer automatisch inkrementiert, wobei die Inkrementierungsrate in Abhängigkeit von der Zahl von Dienstanforderungen variiert wird, die an den Service-Host (22) weitergeleitet werden.

52. System nach einem der Ansprüche 43 bis 51, wobei das Mittel zum Versehen des Teilnehmerendgeräts (20) mit Zugriff (534) auf die Warteschlangenkennung angepasst ist, Zugriff auf Information mit der Warteschlangenkennung bereitzustellen, die dem Teilnehmerendgerät (20) spezifisch ist.

53. System nach einem der Ansprüche 43 bis 52, wobei die nachfolgende Dienstanforderung vom Teilnehmerendgerät (20) anfänglich automatisch durch Code an das Teilnehmerendgerät (20) gesendet wird, wenn Zugriff auf die Warteschlangenkennung bereitgestellt wird.

54. System nach einem der Ansprüche 38 bis 53, wobei Warteschlangenkennungen Zahlen sind und auf einer sequenziellen Basis zugeteilt werden.

55. System nach einem der Ansprüche 38 bis 54, das ferner Mittel zum Überprüfen am Service-Host (22) einschließt, dass die Dienstanforderung ab dem Warteschlangenserver (30, 520) weitergeleitet worden ist.

**56.** System nach einem der Ansprüche 38 bis 55, das ferner Mittel zum automatischen Löschen der Warteschlangenkennung und irgendeiner verschlüsselten Zeichenfolge aus dem Teilnehmerendgerät (20), im Anschluss an die Bereitstellung von Dienst seitens des Service-Hosts (22), einschließt.

**57.** System nach einem der Ansprüche 38 bis 56, das ferner Mittel zur automatischen Abweisung von Dienstanforderungen umfasst, nach dem eine vorgegebene Zahl von Dienstanforderungen an den Service-Host (22) weitergeleitet worden ist.

**58.** System nach einem der Ansprüche 38 bis 57, das eine Vielzahl von Warteschlangenservern (42) und Mittel zum Zuteilen von Dienstanforderungen von Teilnehmerendgeräten (44) zu einem speziellen Warteschlangenserver (42) in Übereinstimmung mit einer vorgegebenen Metrik umfasst.

**Revendications**

**1.** Procédé de gestion des demandes de service acheminées à un ordinateur hôte de service (22) sur un réseau de communication téléphoniques, le procédé comprenant les étapes consistant à :

> recevoir (502) d'un terminal d'abonné (20), via le réseau de communications téléphoniques, une demande de service qui sera fournie par l'ordinateur hôte de service (22) ;
> attribuer (526) un identificateur de file d'attente à la demande de service ;
> recevoir (504) une demande ultérieure de service du terminal d'abonné qui sera fournie par l'ordinateur hôte de service (22) ;
> extraire (530) l'identificateur de file d'attente pour la demande de service ;
> établir une comparaison (528) entre l'identificateur de file d'attente et les informations d'état de file d'attente ; et
> acheminer (546) la demande de service à l'ordinateur hôte de service (22) sur la base du résultat de cette comparaison,
> **caractérisé en ce que** les étapes du procédé sont réalisées dans un serveur de mise en file d'attente (30, 520) et l'étape d'attribution (526) de l'identificateur de file d'attente à la demande de service est réalisée indépendamment du fait que la demande de service a généralement droit à un service de la part de l'ordinateur hôte de service (22).

**2.** Procédé selon la revendication 1, dans lequel l'identificateur de file d'attente est stocké dans une base de données et est associé à un numéro de téléphone du terminal d'abonné (20).

**3.** Procédé selon la revendication 2, dans lequel l'identificateur de file d'attente est extrait (530) de la base de données suite à la demande ultérieure de service.

**4.** Procédé selon l'une quelconque des revendications précédentes, dans lequel l'étape d'acheminement (546) de la demande de service à l'ordinateur hôte de service comprend la connexion d'un appel de l'ordinateur d'abonné (20) à l'ordinateur hôte de service (22).

**5.** Procédé selon l'une quelconque des revendications précédentes, comprenant en outre l'étape d'établissement d'une comparaison initiale (528) entre l'identificateur de file d'attente et les informations d'état de file d'attente après que l'identificateur de file d'attente a été attribué (526) à la demande de service.

**6.** Procédé selon la revendication 5, comprenant en outre l'étape de notification (534) à l'ordinateur d'abonné (20) de la mise en file d'attente de la demande après l'établissement de la comparaison initiale.

**7.** Procédé selon la revendication 6, comprenant en outre l'étape de fourniture (534) au terminal d'abonné (20) d'un accès à l'identificateur de file d'attente.

**8.** Procédé selon la revendication 7, dans lequel un accès à des informations spécifiques au terminal d'abonné (20) est fourni avec l'accès à l'identificateur de file d'attente.

**9.** Procédé de gestion des demandes de service acheminées à un ordinateur hôte de service (22) dans un réseau de communication Internet, le procédé comprenant les étapes consistant à :

> recevoir (502) d'un terminal d'abonné (20), via le réseau de communication Internet, une demande de service qui sera fournie par l'ordinateur hôte de service (22) ;
> attribuer (526) un identificateur de file d'attente à la demande de service ;
> fournir (534) au terminal d'abonné (20) un accès à l'identificateur de file d'attente ;
> recevoir (504) du terminal d'abonné l'identificateur de file d'attente comme partie d'une demande ultérieure de service qui sera fournie par l'ordinateur hôte de service (22) ;
> établir une comparaison (528) entre l'identificateur de file d'attente et les informations d'état de file d'attente ; et
> acheminer (546) la demande de service à l'ordinateur hôte de service (22) sur la base du résultat de cette comparaison,
> **caractérisé en ce que** les étapes du procédé sont réalisées dans un serveur de file d'attente (30, 520) et l'étape d'attribution (526) de l'identificateur de file d'attente à la demande de service est effectuée indépendamment du fait que la demande de service a généralement droit à un service de la part de l'ordinateur hôte de service (22).

10. Procédé selon la revendication 9, dans lequel l'étape d'acheminement (546) de la demande de service à l'ordinateur hôte de service (22) comprend la fourniture au terminal d'abonné (20) d'un accès à une page cible sur l'ordinateur hôte de service (22).

11. Procédé selon la revendication 9 ou la revendication 10, dans lequel après qu'un identificateur de file d'attente a été attribué à une demande de service mais avant de fournir au terminal de d'abonné (20) un accès à l'identificateur de file d'attente, une comparaison initiale est établie entre l'identificateur de file d'attente et les informations d'état de file d'attente et la demande de service est acheminée à l'ordinateur hôte de service (22) sur la base du résultat de la comparaison initiale.

12. Procédé selon l'une quelconque des revendications 9 à 11, dans lequel un accès à des informations spécifiques au terminal d'abonné (20) est fourni avec l'accès à l'identificateur de file d'attente.

13. Procédé selon l'une quelconque des revendications 7 à 12, comprenant en outre l'étape de fourniture au terminal d'abonné (20) d'un accès à des informations supplémentaires relatives à la file d'attente.

14. Procédé selon la revendication 13, dans lequel les informations supplémentaires comprennent un numéro de service, le numéro de service étant une indication de l'identificateur de file d'attente couramment utilisé.

15. Procédé selon la revendication 14, dans lequel le nombre de services est automatiquement incrémenté à une cadence constante.

16. Procédé selon la revendication 14, dans lequel le nombre de services est automatiquement incrémenté, la cadence de l'incrémentation étant rendue différente selon le nombre de demandes de services acheminées à l'ordinateur hôte de service (22).

17. Procédé selon la revendication 14, dans lequel le numéro du service est incrémenté en réponse aux messages provenant de l'ordinateur hôte de service (22).

18. Procédé selon l'une quelconque des revendications précédentes, dans lequel l'identificateur de file d'attente est un numéro et est attribué sur une base séquentielle.

19. Procédé selon l'une quelconque des revendications précédentes, comprenant en outre l'étape de vérification (548), dans l'ordinateur hôte de service, que la demande de service a été acheminée depuis le serveur de file d'attente (30, 520).

20. Procédé selon l'une quelconque des revendications précédentes, comprenant en outre l'étape de suppression automatique de l'identificateur de file d'attente et de toute chaîne cryptée depuis le terminal d'abonné (20) suite à la fourniture de services par l'ordinateur hôte de service (22).

21. Procédé selon l'une quelconque des revendications précédentes, dans laquelle les demandes de service sont reçues par une pluralité de serveurs de files d'attentes (42), comprenant en outre l'étape d'attribution de la demande de service, depuis le terminal d'abonné (44), à un serveur de file d'attente particulier (42) conformément à une métrique prédéterminée.

22. Procédé selon le mode opératoire de l'une quelconque des revendications précédentes, dans lequel l'identificateur de file d'attente correspond à l'une d'une pluralité de files d'attente.

23. Procédé selon la revendication 22, comprenant en outre l'équilibrage de la charge d'abonnés (43) entre les files d'attente.

24. Procédé selon la revendication 22 ou la revendication 23, dans lequel chaque file d'attente correspond à un domaine donné dans le réseau de communication.

25. Procédé selon le mode opératoire de la revendication 24, dans lequel chaque domaine correspond à une zone géographique.

26. Procédé selon le mode opératoire de la revendication 24 ou de la revendication 25, comprenant en outre les étapes consistant à :

consulter le terminal d'abonné pour obtenir un identificateur de domaine ;
recevoir l'identificateur de domaine du terminal d'abonné ; et
après que la demande de service a été acheminée à l'ordinateur hôte de service, vérifier que l'identificateur de domaine correspond au informations concernant le domaine ultérieurement fournies par le terminal d'abonné une fois que la demande de service a été acheminée à l'ordinateur hôte de service.

**27.** Procédé selon le mode opératoire de l'une quelconque des revendications précédentes, comprenant en outre l'étape consistant à :

recevoir une autre demande de service d'un autre terminal d'abonné via le réseau de communication, l'autre terminal d'abonné étant d'un type de terminal d'abonné différent (20).

**28.** Procédé selon l'une quelconque des revendications précédentes, dans lequel le terminal d'abonné (20) est utilisé par un utilisateur, le procédé comprenant en outre les étapes consistant à :

associer un identificateur d'abonné à chaque utilisateur ;
recevoir l'identificateur d'abonné de l'utilisateur ; et
valider l'identificateur d'abonné, en confirmant ainsi que l'utilisateur est un abonné qui revient.

**29.** Procédé selon le mode opératoire de la revendication 28, dans lequel l'identificateur d'abonné est un identificateur de terminal d'abonné qui identifie un terminal d'abonné donné (20) et dans lequel l'étape de validation de l'identificateur d'abonné comprend la vérification de la correspondance entre un autre terminal d'abonné, à partir duquel une demande de service a été reçue, et l'identificateur de terminal d'abonné préalablement attribué.

**30.** Procédé selon le mode opératoire de la revendication 28 ou de la revendication 29, dans lequel l'étape d'association de l'identificateur d'abonné avec chaque utilisateur comprend le maintien d'une base de données de files d'attente d'identificateurs d'abonnés, et dans lequel l'étape de validation de l'identificateur d'abonné comprend la comparaison de l'identificateur du terminal d'abonné du terminal d'abonné (20) avec chaque entrée dans la base de données de files d'attente et, dans le cas où le terminal d'abonné (20) correspond à une entrée dans la base de données de files d'attente, de confirmation que l'utilisateur est un client qui revient.

**31.** Procédé selon le mode opératoire de la revendication 28 ou de la revendication 29, dans lequel l'étape d'association de l'identificateur d'abonné à chaque utilisateur comprend l'obtention d'autres informations d'identification d'abonnés et dans lequel l'étape de validation de l'identificateur d'abonné comprend la validation de l'identificateur d'abonné à l'encontre d'autres informations sur l'abonné.

**32.** Procédé selon l'une quelconque des revendications 28 à 31, dans lequel l'étape d'association de l'identificateur d'abonné avec l'utilisateur comprend les étapes consistant à :

recevoir des informations sur l'abonné de l'utilisateur ;
générer un code de confirmation unique pour l'utilisateur utilisant les informations sur l'abonné ; et,
attribuer le code de confirmation à l'utilisateur.

**33.** Procédé selon la revendication 32, dans lequel l'identificateur d'abonné reçu du terminal d'abonné comprend le code de confirmation et dans lequel l'étape de validation de l'identificateur d'abonné comprend la vérification de la validité du code de confirmation, permettant ainsi à une pluralité d'abonnés d'utiliser le même terminal d'abonné (20).

**34.** Procédé selon l'une quelconque des revendications précédentes, comprenant en outre l'étape de notification (534) à l'abonné lorsque le résultat de la comparaison entre l'identificateur de file d'attente et les informations d'état de file d'attente indiquent que la demande de service devrait être acheminée à l'ordinateur hôte de service (22).

**35.** Procédé selon l'une quelconque des revendications précédentes, dans lequel les informations d'état de file d'attente indiquent qu'un quelconque ou que tous les sous-systèmes de l'ordinateur hôte de service (22) sont en défaillance.

**36.** Procédé selon l'une quelconque des revendications précédentes, comprenant en outre les étapes consistant à :

avant l'étape de comparaison (534), modifier les informations d'état de file d'attente pour indiquer que le service demandé a expiré de manière à ce que l'acheminement de la demande de service à l'ordinateur hôte de service (22) soit empêché ; et
lorsque le service demandé devient disponible, modifier les informations d'état de file d'attente pour indiquer si la demande de service devrait être acheminée à l'ordinateur hôte de service (22).

**37.** Produit-programme informatique ayant un code exécutable par ordinateur stocké sur celui-ci provoquant l'exécution par un ordinateur du procédé selon l'une quelconque des revendications précédentes lorsqu'il est exécuté par l'ordinateur.

**38.** Système de gestion des demandes de services acheminées depuis un terminal d'abonné (20) à un ordinateur hôte de service (22) sur un réseau de communications téléphoniques, le système comprenant un serveur (30, 520) pour la réception depuis le terminal d'abonné (20), via le réseau de communications téléphoniques, d'une demande de service qui sera fournie par l'ordinateur hôte de service (22), le serveur incluant :

un moyen de réception (502) d'une demande de service depuis le terminal d'abonné (20) ;
un moyen d'attribution (526) d'un identificateur de file d'attente à la demande de service ;
un moyen de génération d'informations d'état de file d'attente ;
un moyen d'extraction (530) de l'identificateur de file d'attente suite à une demande ultérieure de service depuis le terminal d'abonné (20) ;
un moyen d'établissement d'une comparaison (528) entre les informations d'état de file d'attente et d'identificateur de file d'attente ; et,
un moyen d'acheminement (546) de la demande de service à l'ordinateur hôte de service en se basant sur le résultat de cette comparaison, **caractérisé en ce que** le serveur est un serveur de file d'attente (30, 520) et le moyen d'attribution (526) de l'identificateur de file d'attente à la demande de service est adapté pour attribuer (526) l'identificateur de file d'attente indépendamment du fait que la demande de service a généralement droit à un service de la part de l'ordinateur hôte de service (22).

39. Système selon la revendication 38, comprenant en outre un moyen de stockage de l'identificateur de file d'attente dans une base de données pour le compte du terminal d'abonné (20) et dans lequel le moyen d'extraction (530) de l'identificateur de file d'attente l'extrait de la base de données.

40. Système selon la revendication 38 ou la revendication 39, dans lequel le moyen d'acheminement de la demande de service est adapté pour connecter un appel du terminal d'abonné (20) à l'ordinateur hôte de service (22).

41. Système selon l'une quelconque des revendications 38 à 40, dans lequel le moyen d'établissement d'une comparaison (528) est adapté, en cours d'utilisation, pour exécuter une comparaison initiale entre l'identificateur de file d'attente et les informations d'état de file d'attente après que le moyen d'attribution (526) a attribué l'identificateur de file d'attente à la demande de service.

42. Système selon la revendication 41, comprenant en outre un moyen de notification (534) au terminal d'abonné (20) que la demande a été mise en file d'attente après l'établissement de la comparaison initiale.

43. Système selon l'une quelconque des revendications 38 à 42, comprenant en outre un moyen de fourniture (534) au terminal d'abonné (20) d'un accès à l'identificateur de file d'attente.

44. Système de gestion des demandes de service depuis un terminal d'abonné (20) à un ordinateur hôte de service (22) dans un réseau de communication Internet, le système comprenant un serveur (30, 520) pour la réception depuis le terminal d'abonné (20), via le réseau de communication Internet, d'une demande de service qui sera fournie par l'ordinateur hôte de service (22), le serveur comprenant :

un moyen de réception (502) d'une demande de service depuis le terminal d'abonné (20) ;
un moyen d'attribution (526) d'un identificateur de file d'attente à la demande de service ;
un moyen de fourniture (534) au terminal d'abonné (20) d'un accès à l'identificateur de file d'attente;
un moyen de génération d'informations d'état de file d'attente ;
un moyen de réception (530) d'un identificateur de file d'attente comme partie d'une demande ultérieure de service depuis le terminal d'abonné (20) ;
un moyen d'établissement d'une comparaison (528) entre les informations d'état de file d'attente et l'identificateur de file d'attente ; et
un moyen d'acheminement (546) de la demande de service à l'ordinateur hôte de service (22) en se basant sur le résultat de cette comparaison, **caractérisé en ce que** le serveur est un serveur de file d'attente (30, 520) et le moyen d'attribution (526) de l'identificateur de file d'attente à la demande de service est adapté pour attribuer (526) l'identificateur de file d'attente indépendamment du fait que la demande de service a généralement droit à un service de la part de l'ordinateur hôte de service (22).

45. Système selon la revendication 44, dans lequel le moyen d'acheminement de la demande de service est adapté pour fournir au terminal d'abonné (20) un accès à une page cible sur l'ordinateur hôte de service (22).

46. Système selon la revendication 44 ou 45, dans lequel, en cours d'utilisation, après que la demande de service a été attribuée à un identificateur de file d'attente, mais avant de fournir au terminal d'abonné (20) un accès à l'identificateur de file d'attente, le moyen d'établissement d'une comparaison (528) est adapté pour établir une comparaison initiale entre l'identificateur de file d'attente et les informations d'état de file d'attente et le moyen d'acheminement (546) de la demande de service à l'ordinateur hôte de service (22) est adapté pour le faire sur la base du résultat de la comparaison initiale.

**47.** Système selon la revendication 46, comprenant en outre un moyen de notification (534) au terminal d'abonné (20) de la mise en file d'attente de la demande après l'établissement de la comparaison initiale.

**48.** Système selon l'une quelconque des revendications 43 à 47, dans lequel le moyen de fourniture au terminal d'abonné (20) d'un accès à l'identificateur de file d'attente est adapté pour fournir (534) au terminal d'abonné (20) un accès à d'autres informations relatives à la file d'attente avec l'identificateur de file d'attente.

**49.** Système selon la revendication 48, dans lequel les autres informations comprennent un numéro de service, le numéro de service permettant de fournir une indication de l'identificateur de file d'attente couramment utilisé.

**50.** Système selon la revendication 49, dans lequel, en cours d'utilisation, le serveur de file d'attente (30, 520) incrémente le numéro de service automatiquement à une cadence constante.

**51.** Système selon la revendication 49, dans lequel, en cours d'utilisation, le serveur de file d'attente (30, 520) incrémente le numéro de service automatiquement, la cadence de l'incrémentation étant rendue différente selon le nombre de demandes de services acheminé à l'ordinateur hôte de service (22).

**52.** Système selon l'une quelconque des revendications 43 à 51, dans lequel le moyen de fourniture (534) au terminal d'abonné (20) d'un accès à l'identificateur de file d'attente est adapté pour fournir un accès à des informations spécifiques au terminal d'abonné (20) avec l'identificateur de file d'attente.

**53.** Système selon l'une quelconque des revendications 43 à 52, dans lequel la demande ultérieure de service du terminal d'abonné (20) est déclenchée automatiquement par un code envoyé au terminal d'abonné (20) lorsque l'accès à l'identificateur de file d'attente est fourni.

**54.** Système selon l'une quelconque des revendications 38 à 53, dans lequel les identificateurs de file d'attente sont des numéros et sont attribués sur une base séquentielle.

**55.** Système selon l'une quelconque des revendications 38 à 54, comprenant en outre un moyen de vérification dans l'ordinateur hôte de service (22) que la demande de service a été acheminée depuis le serveur de file d'attente (30, 520).

**56.** Système selon l'une quelconque des revendications 38 à 55, comprenant en outre un moyen de suppression automatique de l'identificateur de file d'attente et de toute chaîne cryptée du terminal d'abonné (20) suite à la fourniture de services par l'ordinateur hôte de service (22).

**57.** Système selon l'une quelconque des revendications 38 à 56, comprenant en outre un moyen de refus automatique des demandes de services après qu'un nombre prédéterminé de demandes de services a été acheminé à l'ordinateur hôte de service (22).

**58.** Système selon l'une quelconque des revendications 38 à 57, comprenant une pluralité de serveurs de files d'attente (42) et un moyen d'attribution de demandes de services de terminaux d'abonnés (44) à un serveur de file d'attente particulier (42) conformément à une métrique prédéterminée.

Fig 1

Stage 1:
User Chooses
Product

Stage 2:
User Enters Payment
Details

Stage 3:
Order
Complete

Fig 2

Stage 1:
User Chooses
Product

Stage 2:
User
Queued

Stage 3:
User Enters
Payment Details

Stage 4:
Order
Complete

Fig 3

Fig 4

Customer | Queue Server | Payment System

502 New Customer

510 Choose Product

512 Enter Personal Information (Optional)

514 Joined Queue through Other Point Of Sale?

504 Returning Customer

516 Enter Recognition Information

520 Arrive At Queue System

522 Already Has Request Number?

524 Store Gathered Information

526 Issue New Request Number

528 Request Number > Service Number?

530 Request Number Retrieved

532 Is Valid? (Fraud Check)

528 Yes: Eligible For Service

544 Receive Message

542 Send Message — SMS Text and/or Email

540 Wait until Customer is Eligible

538 Store Contact Information — Nr. In Queue

536 Enter Contact Information — Phone Number and/or Email Address

534 Given Queue Information — Request Notification (Including Recognition Information, where appropriate)

Automatic Refresh, Or Call Back

506 Queued Customer

546 Check & Process Gathered Information (Optional)

548 Is Valid? (Fraud Check) — No / Yes

550 Request Credit Card Details

552 Give Credit Card Details

554 Complete Purchase

556 Flag Customer as Invalid (Optional: Prevents Customer from buying more Product)

558 Order Complete

Fig 5

# Thank You for Your Request!

## You are still in our queue.

**YOUR REQUEST 51843**

**Now Serving Numbers 47392 And Below**

# Your Estimated Wait: 44 m 31 s
### (Based on Current Rates)

Thank you for your request. Due to overwhelming demand, we are using a queue system to allocate service on a first come, first served basis. Your request number is 51843 . We are currently serving all request numbers 47392 and below.

**TO COMPLETE YOUR TRANSACTION, YOU MUST RETURN TO THIS PAGE AND ENTER YOUR PAYMENT DETAILS ONCE YOUR NUMBER COMES UP**

* Your request number has been stored on your computer. We're servicing requests as fast as we can, and currently estimate that your request will be eligible for service at around 16:04 .

* You can check our progress at any time by reloading this page. This will not make us go any faster though...

* If you like, you may close this browser window and come back later, your position in the queue will not be affected.

* Or, you can just leave this window open, and we'll automatically update it every few minutes. If your number is up, we'll take you straight to the payment page.

**Thank you for your patience, and see you again soon!**

Queue management by OrderlyQ.com

Fig 6

**EP 1 751 954 B1**

## REFERENCES CITED IN THE DESCRIPTION

### Patent documents cited in the description

- US 2003023734 A1